(19) Europäisches Patentamt
European Patent Office
Office européen des brevets

(11) Numéro de publication: **0 094 304**
**B1**

# (12) FASCICULE DE BREVET EUROPEEN

(45) Date de publication du fascicule du brevet: **12.03.86**

(21) Numéro de dépôt: **83400907.8**

(22) Date de dépôt: **05.05.83**

(51) Int. Cl.[4]: **C 07 C 69/73**, C 07 C 69/743, C 07 C 153/11, C 07 C 67/00, C 07 F 9/40 // C07C121/75, C07C67/343

(54) **Nouveau procédé de préparation de dérivés de l'acide cyclopropane carboxylique et nouveaux intermédiaires.**

(30) Priorité: **06.05.82 FR 8207870**

(43) Date de publication de la demande: **16.11.83 Bulletin 83/46**

(45) Mention de la délivrance du brevet: **12.03.86 Bulletin 86/11**

(84) Etats contractants désignés: **AT BE CH DE FR GB IT LI LU NL SE**

(56) Documents cités:
**FR - E - 95 346**

**TETRAHEDRON, vol. 34, no. 7, 1978, pages 997-1002, *Pergamon Press*, G.B. E. BREUER *et al.*: *"The preparation of some cyclic phosphonates and their use in olefin synthesis"***

(73) Titulaire: **ROUSSEL-UCLAF, 35, boulevard des Invalides, F-75007 Paris (FR)**

(72) Inventeur: **Tessier, Jean, 30, rue Jean Moulin, F-94300 Vincennes (FR)**
Inventeur: **Demoute, Jean-Pierre, 249bis, rue de Rosny, F-93100 Montreuil-sous-Bois (FR)**

(74) Mandataire: **Tonnellier, Marie-José et al, ROUSSEL-UCLAF 111, route de Noisy Boîte Postale no.9, F-93230 Romainville (FR)**

**EP 0 094 304 B1**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention concerne un nouveau procédé de préparation de dérivés de l'acide cyclopropane carboxylique et des nouveaux intermédiaires.

L'invention a pour objet un procédé de préparation des composés répondant à la formule (I):

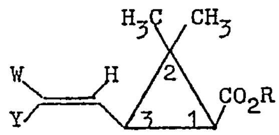

(I)

dans laquelle la copule cyclopropanique est de structure 1R cis dans laquelle R représente un atome d'hydrogène, un radical alcoyle renfermant de 1 à 18 atomes de carbone, un radical facilement clivable dérivé d'un alcool R−OH renfermant jusqu'à 18 atomes de carbone, ou un radical dérivé d'un alcool ROH utilisé en série pyréthrinoïde, et: ou bien W représente un atome d'hydrogène et Y représente un radical $CO_2R'$ ou COSR', ou bien W représente un atome d'halogène Hal et Y représente un radical $CO_2R'$, R' représentant un atome d'hydrogène ou un radical alcoyle linéaire, ramifié ou cyclisé, saturé ou insaturé, éventuellement substitué par un ou plusieurs groupements fonctionnels identiques ou différents, ou un radical aryle renfermant de 6 à 14 atomes de carbone éventuellement substitué par un ou plusieurs groupements fonctionnels identiques ou différents, ou un radical hétérocyclique éventuellement substitué par un ou plusieurs groupements fonctionnels identiques ou différents, formule (I) dans laquelle la configuration de la double liaison est:
soit Z, si W représente un atome d'hydrogène,
soit E, si W représente un atome d'halogène,
caractérisé en ce que l'on soumet en présence d'une base forte un composé de formule (II):

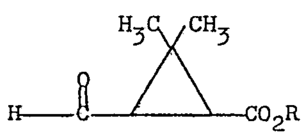

(II)

dans laquelle R conserve la signification précitée, à l'action d'un composé de formule (III):

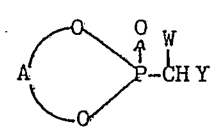

(III)

dans laquelle Y et W conservent leur signification précédente, et A représente un radical carboné renfermant jusqu'à 18 atomes de carbone qui relie deux des atomes d'oxygène fixés sur le phosphore, pour obtenir un composé de formule (I) dans laquelle la configuration de la double liaison est:
soit Z, si W représente un atome d'hydrogène,
soit E, si W représente un atome d'halogène,
le cyclopropane et le carboxyle du radical Y étant dans les deux cas en position cis par rapport à la double liaison.

Lorsque R' représente un radical alcoyle saturé, linéaire ou ramifié, il s'agit de préférence d'un radical méthyle, éthyle, n-propyle, isopropyle, n-butyle, sec.-butyle, isobutyle, n-pentyle, n-hexyle, tert.-butyle, tert.-pentyle ou néopentyle.

Lorsque R' représente un radical cyclique, il s'agit de préférence d'un radical cyclopropyle, cyclobutyle, cyclopentyle ou cyclohexyle, d'un radical alcoyle, linéaire ou ramifié, portant l'un de ces radicaux, ou d'un radical cyclopropyle, cyclobutyle, cyclopentyle ou cyclohexyle substitué par un ou plusieurs radicaux alcoyles, dont la liaison avec le groupement −COO− est situé sur l'un quelconque de ses sommets, par exemple, le radical 1-méthylcyclobutyle, 1-méthylcyclopentyle, 1-méthylcyclohexyle ou 2,2,3,3-tétraméthylcyclopropyle.

Lorsque R' représente un radical alcoyle insaturé, il s'agit d'un radical éthylénique, par exemple d'un radical vinyle ou 1,1-diméthylallyle ou d'un radical acétylénique, par exemple le radical éthynyle ou propynyle.

Lorsque R' représente un radical alcoyle, substitué par un ou plusieurs groupements fonctionnels, on entend de préférence par alcoyle un radical renfermant de 1 à 8 atomes de carbone, par exemple le radical méthyle, éthyle, isopropyle, n-butyle, tert.-butyle.

Lorsque R' représente un radical alcoyle, substitué par un ou plusieurs groupements fonctionnels, on entend de préférence par groupement fonctionnel un atome d'halogène, un groupement OH ou SH, un groupement $OR'_1$ ou $SR'_1$ dans lesquels $R'_1$ représente un radical alcoyle renfermant de 1 à 8 atomes de carbone, un groupement $NO_2$ ou:

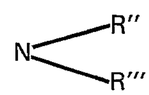

dans lequel R'' et R''', identiques ou différents, représentent un atome d'hydrogène, un radical alcoyle renfermant de 1 à 8 atomes de carbone, un groupement $-C\equiv N$, $-SO_3H$, $PO_4H_2$ ou un groupement $COalc_1$, $SO_2alc_2$ ou $SO_3alc_3$ dans lesquels $alc_1$, $alc_2$ et $alc_3$ représentent des radicaux alcoyles renfermant de 1 à 18 atomes de carbone.

R' peut représenter également un radical alcoyle substitué par un radical aryle, par exemple le radical benzyle ou le radical phénéthyle, lui-même éventuellement substitué par un ou plusieurs groupements OH, Oalc ou alc renfermant de 1 à 8 atomes de carbone, par un ou plusieurs groupements $CF_3$, $OCF_3$, $SCF_3$ ou par un groupement (G):

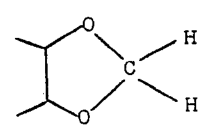

(G)

R' peut représenter également un radical alcoyle substitué sur deux carbones adjacents par un groupement ($G_1$):

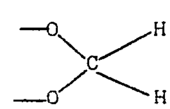

($G_1$)

ou substitué par un groupement: 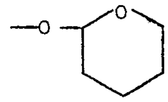

Lorsque R′ représente un radical alcoyle substitué par un ou plusieurs groupements fonctionnels, on peut citer, comme valeurs préférées, les radicaux:

$-(CH_2)_n-C\ Hal_3$ dans lequel n est un entier de 1 à 8 et Hal un atome d'halogène, par exemple, le radical $-CH_2-CCl_3$, $-CH_2-CF_3$, $-CH_2-CH_2-CCl_3$ ou $-CH_2-CH_2-CF_3$,

$-(CH_2)_{n_1}-CH\ Hal_2$ dans lequel Hal est défini comme ci-dessus et $n_1$ est un nombre de 0 à 8, par exemple, le radical $-CH_2-CHCl_2$, $-CH_2-CHF_2$ ou $-CHF_2$,

$-(CH_2)_n-CH_2\ Hal$ dans lequel n et Hal sont définis comme ci-dessus, par exemple, le radical $-CH_2-CH_2Cl$ ou $-CH_2-CH_2F$,

$-C(CHal_3)_3$ dans lequel Hal est défini comme ci-dessus, par exemple le radical $-C-(CF_3)_3$ ou

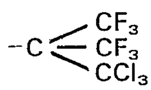 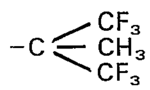 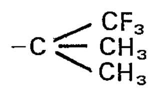

ou 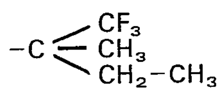

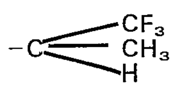 ou 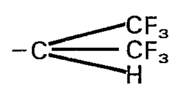

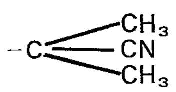 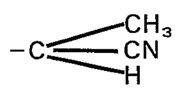

ou $-(CH_2)_n-CN$, dans lequel n est défini comme précédemment,

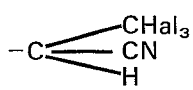

dans lequel Hal est défini comme précédemment, par exemple, le radical

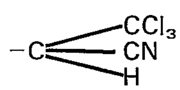 ,

$-(CH_2)_n-OR_a$, dans lequel n est défini comme précédemment et $R_a$ représente un atome d'hydrogène ou un radical alcoyle, linéaire ou ramifié, comportant de 1 à 8 atomes de carbone, par exemple le radical $-CH_2-OCH_3$, $-CH_2-CH_2-O-CH_3$, $-CH_2-CH_2-O-CH_2-CH_3$ ou $-CH_2-CH_2-OH$,

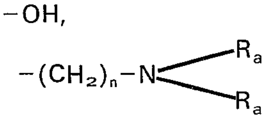

dans lequel n et $R_a$ sont définis comme précédemment et les deux radicaux $R_a$ peuvent être différents entre eux,

par exemple le radical 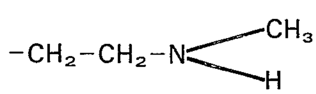

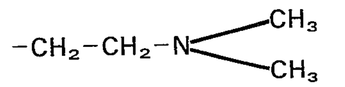

ou 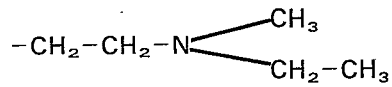

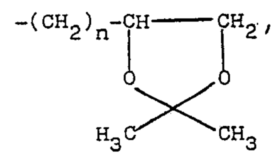

dans lequel n est défini comme précédemment, par exemple le radical: 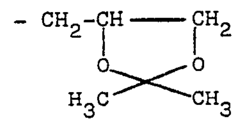

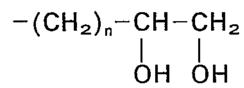 , dans lequel n est défini comme précédemment, par exemple le radical:

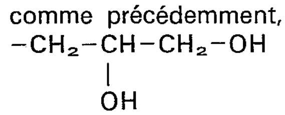

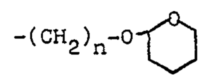

dans lequel n est défini comme précédemment, par exemple le radical:

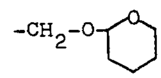 ou 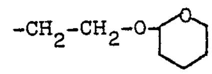

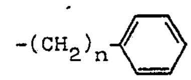

dans lequel n est défini comme précédemment, par exemple le radical benzyle ou phénéthyle:

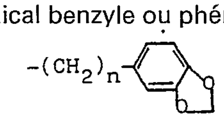

dans lequel n est défini comme précédemment, par exemple, le radical:

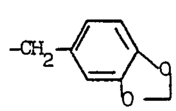

Lorsque R′ représente un radical aryle éventuellement substitué, il s'agit de préférence du radical phényle ou du radical phényle substitué par un ou plusieurs groupements OH, Oalc ou alc, renfermant de 1 à 8 atomes de carbone, ou par un groupement $CF_3$, $OCF_3$ ou $SCF_3$.

Lorsque R′ représente un radical hétérocyclique, il s'agit de préférence du radical pyridinyle, furannyle, thiophényle, oxazolyle ou thiazolyle.

Lorsque W représente un atome d'halogène, il peut s'agir, par exemple, d'un atome de chlore ou de brome, mais il s'agit de préférence d'un atome de fluor.

Lorsque R représente un radical alcoyle, il s'agit de préférence du radical méthyle, éthyle ou tert.-butyle.

Lorsque R représente le reste facilement clivable d'un alcool R−OH renfermant jusqu'à 18 atomes de carbone, il s'agit de préférence outre du radical tert.-butyle, d'un radical $-CH_2-O-CH_3$, $-CH_2-C_6H_5$, $-CH_2-S-CH_3$ ou $-Si(alc)_3$, alc représentant un radical alcoyle renfermant de 1 à 6 atomes de carbone.

Par alcool utilisé en série pyréthrinoïde, on entend tout alcool pouvant être utilisé pour la préparation de produits intermédiaires ou pour la préparation des produits finals biologiquement actifs; il s'agit de préférence des produits dont la liste est donnée plus loin.

Comme base forte, on peut utiliser, par exemple, l'hydrure de sodium, un alcoolate alcalin ou alcalino-terreux, un amidure alcalin ou un dérivé organolithien.

L'invention a notamment pour objet un procédé de préparation, caractérisé en ce que R représente:
soit un radical alcoyle, linéaire ramifié ou cyclisé, renfermant de 1 à 18 atomes de carbone,
soit un radical benzyle éventuellement substitué par un ou plusieurs radicaux choisis dans le groupe constitué par les radicaux alcoyles comportant de 1 à 4 atomes de carbone, les radicaux alcényles comportant de 2 à 6 atomes de carbone, les radicaux alcényloxy comportant de 2 à 6 atomes de carbone, les radicaux alcadiényles comportant de 4 à 8 atomes de carbone, le reste méthylènedioxy, et les atomes d'halogène,
soit un groupement

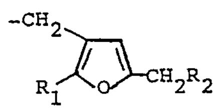

dans lequel le substituant $R_1$ représente un atome d'hydrogène ou un radical méthyle et le substituant $R_2$ un aryle monocyclique ou un groupement $-CH_2-\equiv CH$,
soit un groupement:

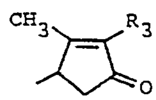

dans lequel $R_3$ représente un radical organique aliphatique comportant de 2 à 6 atomes de carbone et une ou plusieurs insaturations carbone-carbone et notamment les radicaux $-CH_2-CH=CH_2$, $-CH_2-CH=CH-CH_3$, $-CH_2-CH=CH-C_2H_5$, $-CH_2-CH=CH-CH=CH_2$,
soit un groupement:

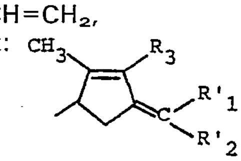

dans lequel $R_3$ conserve la même signification que précédemment, $R'_1$ et $R'_2$, identiques ou différents, représentent un atome d'hydrogène, un atome d'halogène, un radical alcoyle renfermant de 1 à 6 atomes de carbone, un radical aryle comportant de 6 à 10 atomes de carbone, un groupement alcoyloxycarbonyle comportant de 2 à 5 atomes de carbone, ou un groupement cyano,
soit un groupement:

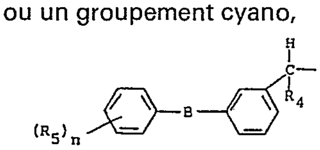

dans lequel B représente un atome d'oxygène ou de soufre ou un groupement

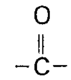 ou $-CH_2-$

ou un groupement sulfoxyde ou un groupement sulfone et $R_4$ représente un atome d'hydrogène, un radical $-C\equiv N$, un radical méthyle, un radical $-CONH_2$, un radical $-CSNH_2$ ou un radical $-C\equiv CH$, $R_5$ représente un atome d'halogène ou un radical méthyle et n représente un nombre égal à 0, 1 ou 2,
soit un groupement:

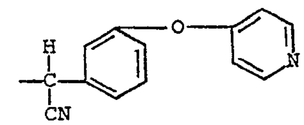

soit un groupement:

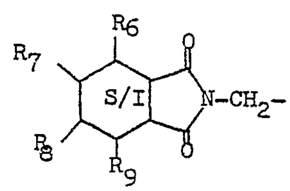

dans lequel les substituants $R_6$, $R_7$, $R_8$ et $R_9$ représentent un atome d'hydrogène, un atome de chlore, ou un radical méthyle et dans lequel S/I symbolise un cycle aromatique ou un cycle analogue dihydro ou tétrahydro,
soit un groupement:

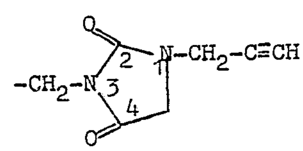

soit un groupement:

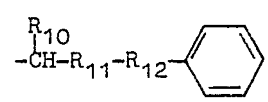

dans lequel $R_{10}$ représente un atome d'hydrogène ou un radical −CN, $R_{12}$ représente un radical $-CH_2-$ ou un atome d'oxygène, $R_{11}$ représente un radical thiazolyle ou thiadiazolyle dont la liaison avec

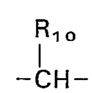

peut se trouver à l'une quelconque des positions disponibles, $R_{12}$ étant lié à $R_{11}$ par l'atome de carbone compris entre l'atome de soufre et un atome d'azote,
soit un groupement:

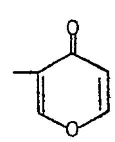

soit un groupement:

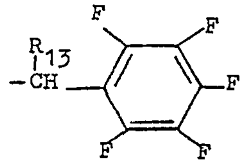

dans lequel $R_{13}$ représente un atome d'hydrogène ou un radical CN,

soit un groupement:

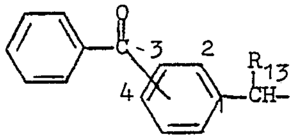

dans lequel $R_{13}$ est défini comme ci-dessus et le radical benzoyle est en position 3 ou 4,

soit un groupement:

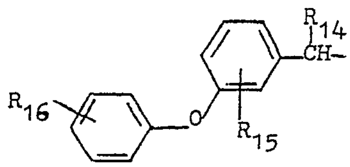

dans lequel $R_{14}$ représente un atome d'hydrogène, un radical méthyle, éthynyle ou cyano et $R_{15}$ et $R_{16}$, différents, représentent un atome d'hydrogène, de fluor ou de brome,

soit un groupement:

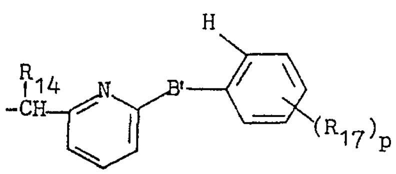

dans lequel $R_{14}$ est défini comme ci-dessus, chacun des $R_{17}$ représente indépendamment un atome d'hydrogène, un groupement alcoyle renfermant de 1 à 4 atomes de carbone, alcoxy renfermant de 1 à 4 atomes de carbone, alcoylthio renfermant de 1 à 4 atomes de carbone, alcoylsulfonyl renfermant de 1 à 4 atomes de carbone, trifluorométhyle, 3,4-méthylènedioxy, chloro, fluoro ou bromo, p représente un nombre égal à 0, 1 ou 2 et B' représente un atome d'oxygène ou de soufre.

L'invention a plus spécialement pour objet un procédé de préparation, caractérisé en ce que R représente le radical:

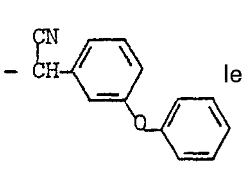 le radical: 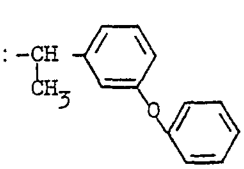

ou le radical: 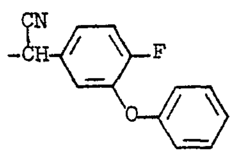

ou le radical: 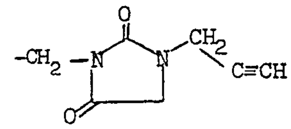

ou le radical: 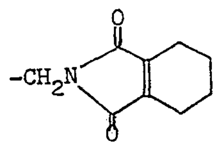

ou le radical: 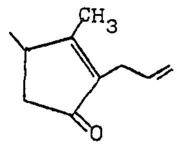

ou le radical: 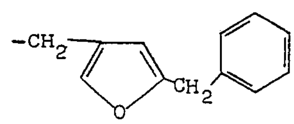

ou le radical: 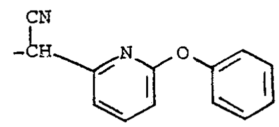

L'invention a également tout particulièrement pour objet un procédé de préparation des composés de formule (I), caractérisé en ce que R représente un atome d'hydrogène ou le reste facilement clivable d'un alcool renfermant jusqu'à 18 atomes de carbone et notamment un reste facilement clivable choisi dans le groupe constitué par le radical:

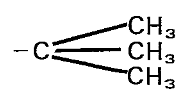

le radical $-CH_2OCH_3$, le radical $-CH_2C_6H_5$, le radical $CH_2SCH_3$, le radical $Si(alc)_3$, alc représentant un radical alcoyle renfermant de 1 à 6 atomes de carbone.

L'invention a tout spécialement pour objet un procédé de préparation, caractérisé en ce que l'on utilise un composé de formule ($III_1$):

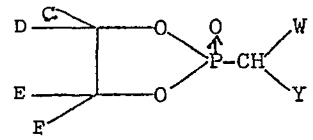 ($III_1$)

ou un composé de formule ($III_2$):

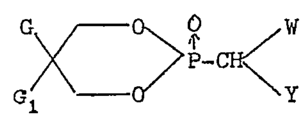 ($III_2$)

dans lesquelles les substituants C, D, E, F, G et $G_1$ représentent un atome d'hydrogène ou un radical alkyle renfermant de 1 à 3 atomes de carbone, et notamment un procédé caractérisé en ce que l'on utilise un composé de formule ($III_1$) dans laquelle C et E représentent un atome d'hydrogène et D et F, un radical méthyle.

L'invention a également plus particulièrement pour objet un procédé, caractérisé en ce que l'on opère à une température comprise entre −70 et +25° C.

L'invention a aussi tout spécialement pour objet un procédé, caractérisé en ce que l'on opère au sein d'un solvant choisi dans le groupe constitué par le tétrahydrofuranne, le diméthylformamide, le diméthylsulfoxyde, l'hexaméthylphosphotriamide et le diméthoxyéthane, purs ou en mélanges avec des hydrocarbures aliphatiques ou aromatiques.

L'invention a tout particulièrement pour objet un procédé, caractérisé en ce que l'on fait réagir un composé de formule (II) défini comme précédemment avec un composé de formule ($III_A$):

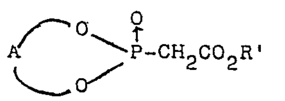

($III_A$)

A et R' étant définis comme précédemment, pour obtenir un composé de formule ($I_A$):

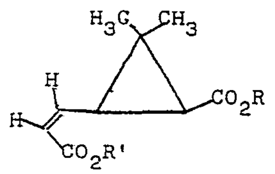

($I_A$)

dans laquelle la configuration de la double liaison est Z, et également un procédé caractérisé en ce que l'on fait réagir un composé de formule (II) défini comme précédemment avec un composé de formule ($III_B$):

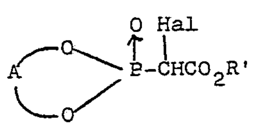

($III_B$)

A, R' et Hal étant définis comme précédemment, pour obtenir le composé de formule:

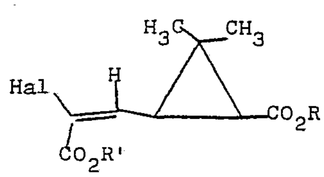

($I_B$)

dans laquelle la configuration de la double liaison est E.

L'invention a, en outre, notamment pour objet un procédé caractérisé en ce que l'on fait réagir un composé de formule (II) défini comme précédemment avec un composé de formule ($III_C$):

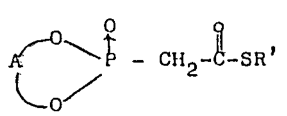

($III_C$)

dans laquelle A et R' sont définis comme précédemment, pour obtenir les composés de formule ($I_C$) correspondants:

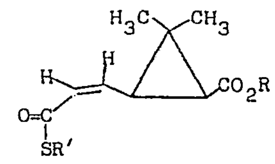

($I_C$)

dans laquelle la configuration de la double liaison est Z.

Le composé de formule (II), si R représente un atome d'hydrogène, peut se présenter sous forme de lactone correspondante, c'est-à-dire de lactone de l'acide cis 2,2-diméthyl 3-dihydroxyméthylcyclopropane 1-carboxylique.

Les composés de formule (I) sont des produits chimiques connus d'une façon générale; ils sont doués de propriétés pesticides très intéressantes, ou peuvent être utilisés comme intermédiaires dans la synthèse de produits pesticides très intéressants.

Ils sont décrits notamment dans les demandes de brevets européens N^os 0038271, 0041021, 0048186 et 0050534.

Les produits de formule (I) pour lesquels Y représente un radical −COSR' sont des produits décrits et revendiqués dans la demande de brevet français N° 81-19481 déposée le 16 octobre 1981.

Ils peuvent être préparés en soumettant un produit de formule:

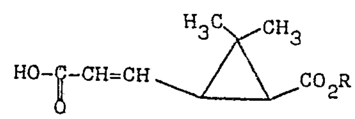

dans laquelle R est défini comme précédemment, à l'action d'un mercaptan de formule:

HSR'

pour obtenir le composé de formule (I) recherché.

Ces produits comme tous les produits de formule (I) présentent des propriétés pesticides, notamment insecticides et acaricides, très intéressantes ou constituent des intermédiaires dans la synthèse de produits actifs.

On donnera ci-après la préparation de quelques-uns de ces produits tels que décrits dans la demande de brevet français N° 81-19481.

Le procédé objet de la présente invention est particulièrement intéressant car il permet d'obtenir de façon simple et rapide, à partir de matières premières facilement accessibles, les produits recherchés (I) avec la configuration de la double liaison désirée, c'est-à-dire les produits dans lesquels le cyclopropane et le carboxyle du groupement Y sont en position cis par rapport à la double liaison.

Selon le procédé de l'invention, la structure du composé de formule (II) au niveau du cycle cyclopropane comme à celui du radical R est celle du composé de formule (I) que l'on désire obtenir, aucune modification de structure n'intervenant au cours dudit procédé.

Il est tout à fait surprenant que la structure 1R cis de la copule cyclopropanique soit conservée dans les conditions basiques où a lieu la réaction.

On pouvait s'attendre, en effet, qu'en milieu basique, il y ait isomérisation cis→trans de la copule cyclopropanique.

On sait que d'une façon générale, en milieu basique, l'isomérie cis→trans de la copule cyclopropanique se produit (voir à ce sujet l'article de Paul R. Ortiz de Montellano, «J. Org. Chem.», vol. 43, N° 22, *1978*, pp. 4323 et suivantes).

Les procédés de préparation des produits de formule (I) connus à ce jour ne permettaient d'obtenir les produits de formule (I) qu'avec un schéma de synthèse beaucoup plus long ou ne conduisaient pas à la même stéréospécificité; c'est ainsi par exemple que la demande de brevet européen N° 0048186 décrit et revendique un procédé de préparation d'esters de formule:

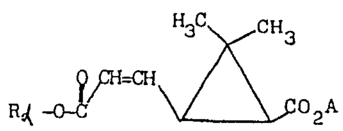

dans laquelle $R_\alpha$ est un radical alcoyle, linéaire, ramifié ou cyclisé et A, le reste d'un alcool utilisé en synthèse pyréthrinoïde, ainsi que des acides et esters d'alcoyles correspondants, caractérisé en ce que l'on fait réagir un composé de formule (IV):

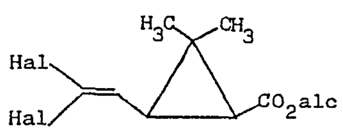 (IV)

dans laquelle Hal représente un atome d'halogène et alc représente un radical alcoyle renfermant de 1 à 20 atomes de carbone avec un agent alcalin capable d'arracher les atomes d'halogène, puis dans un deuxième temps, soit avec un agent capable d'introduire le groupement carboxylique pour obtenir le composé de formule (V):

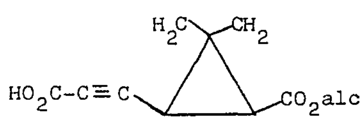 (V)

que l'on soumet à l'action d'un agent d'estérification $R_\alpha OH$, dans lequel $R_\alpha$ conserve la même signification que précédemment pour obtenir le composé de formule (VI):

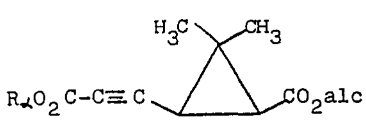 (VI)

soit avec un dérivé de formule:

$$Hal-CO_2R_\alpha$$

dans laquelle Hal représente un atome d'halogène et $R_\alpha$ conserve sa signification précédente pour obtenir directement le composé de formule (VI):

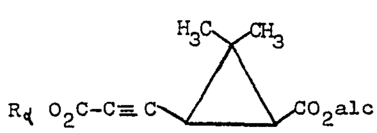 (VI)

puis soumet le composé de formule (VI) à l'action d'un agent d'hydrogénation ménagée pour obtenir le composé de formule (VII):

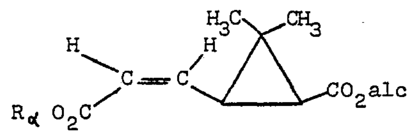 (VII)

dans laquelle la double liaison a la géométrie Z, que l'on soumet à l'action d'un agent d'hydrolyse acide capable de cliver sélectivement la fonction ester branchée sur le carbone en 1 du cyclopropane, pour obtenir le composé de formule correspondant:

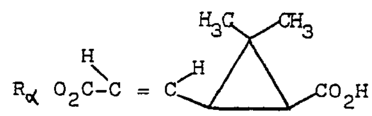

que l'on soumet à l'action d'un alcool AOH, pour obtenir l'ester correspondant de formule:

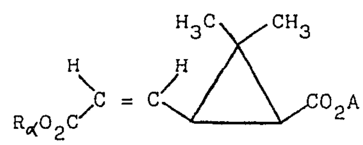

dans laquelle la géométrie est essentiellement Z.

Il est encore connu que l'on peut obtenir les composés de formule (I) en soumettant au sein d'un solvant organique un composé de formule:

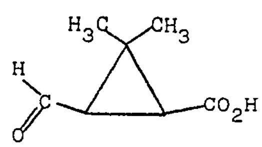

à l'action d'un composé de formule:

$$(\varphi)_3{\equiv}P{=}CH{-}\underset{\underset{O}{\|}}{C}{-}OR_\alpha \text{ ou } (R'O)_2\overset{\overset{O}{\uparrow}}{P}{-}CH_2CO_2R_\beta$$

$R_\alpha$ et $R_\beta$ étant un radical hydrocarboné, selon la réaction de Wittig classique, pour obtenir les composés de formule:

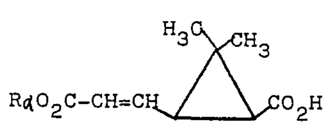

ou

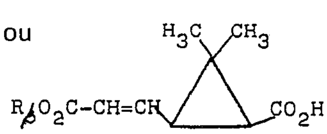

sous la forme d'un mélange d'isomères E et Z que l'on sépare en chacun des isomères. Ce procédé n'est pas intéressant du point de vue industriel puisqu'il conduit à des mélanges renfermant essentiellement des produits dont la configuration

est E, c'est-à-dire des produits qui sont les moins intéressants en tant que pesticides.

Le procédé de l'invention qui utilise des phosphonates cycliques conduit par un procédé rapide et simple aux produits de configuration choisie, c'est-à-dire aux produits dans lesquels le cyclopropane et le carboxyle sont en position cis par rapport à la double liaison et avec d'excellents rendements.

Certains produits de formule III sont connus et peuvent, par exemple, être préparés selon le schéma suivant:

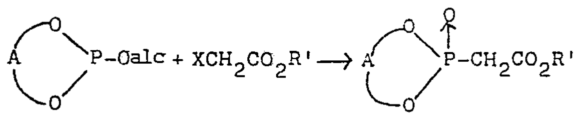

X représentant un atome d'halogène et alc un radical alcoyle inférieur.

Certains produits de formule ($III_A$) sont nouveaux comme, par exemple, les produits répondant aux formules:

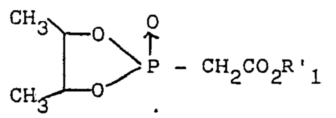
($III_{A1}$)

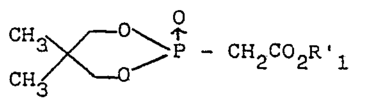
($III_{A2}$)

dans lesquelles $R'_1$ représente un radical propyle, isopropyle ou tert.-butyle.

Ces produits ($III_{A1}$) et ($III_{A2}$) sont en eux-mêmes un objet de la présente invention en tant que produits chimiques nouveaux et notamment en tant qu'intermédiaires nécessaires à la mise en œuvre du procédé de l'invention.

Les produits des formules ($III_B$) et ($III_C$) sont également des produits nouveaux et sont en eux-mêmes un objet de la présente invention en tant que produits chimiques nouveaux et notamment en tant qu'intermédiaires nécessaires à la mise en œuvre du procédé de l'invention.

Parmi ces produits de formules ($III_B$) et ($III_C$), on peut citer tout particulièrement les produits de formule:

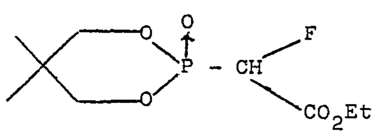

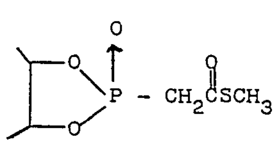

Des exemples de préparation de produits de formules ($III_B$) et ($III_C$) figurent ci-après dans la partie expérimentale.

Les exemples suivants illustrent l'invention sans toutefois la limiter.

*Exemple 1:*

*Acide (1R,cis-ΔZ) 2,2-diméthyl 3-/3-oxo-3-terbutoxy 1-propényl/cyclopropanecarboxylique*

On place 65 g de bromure de lithium dans 600 $cm^3$ de tétrahydrofuranne anhydre. Puis on introduit à −40° C, 18,3 $cm^3$ de diisopropylamine, 50 g de 2-terbutoxycarbonylméthyl-4,5-diméthyl 2-oxo-1,3,2-dioxaphospholane:

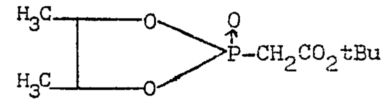

et 19 g de la lactone de l'acide (1R,cis) 2,2-diméthyl 3-dihydroxyméthylcyclopropane 1-carboxylique. On ajoute lentement en 30 min et en maintenant la température à −40° C, 45 g de terbutylate de potassium en solution dans 100 $cm^3$ de tétrahydrofuranne. On maintient le mélange réactionnel sous agitation pendant 1 h à −40° C. On verse le mélange sur 1 l d'acide chlorhydrique N aqueux. On extrait à l'éther isopropylique, lave à l'eau, sèche et évapore à sec sous pression réduite.

On obtient ainsi 32 g de produit renfermant 93% de l'isomère Z recherché.

Un résultat similaire peut être obtenu avec la préparation du 2-terbutoxycarbonylméthyl, 5,5-diméthyl-2-oxo 1,3,2-dioxaphosphorinane:

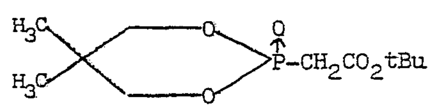

dont la préparation est décrite ci-après.

*Préparation I:*

Le 2-terbutoxycarbonylméthyl 4,5-diméthyl-2-oxo 1,3,2-dioxaphospholane utilisé comme produit de départ est préparé comme suit:

*Stade A: 2-Méthoxy 4,5-diméthyl 1,3,2-dioxaphospholane*

On chauffe à 100° C un mélange renfermant 300 g de phosphite de triméthyle et 200 $cm^3$ de 2,3-butanediol. On distille le méthanol formé et obtient ainsi 170 g du produit recherché.

Eb. = 66° C sous 20 mmHg.

*Stade B: Produit final recherché*

On chauffe à 115° C 62,5 g de bromoacétate de terbutyle, sous pression réduite de 140 mm de mercure. On introduit ensuite en 2 h 37 g de 2-méthoxy 4,5-diméthyl 1,3,2-dioxaphospholane. Après avoir éliminé les produits volatils sous pression réduite, on récupère 59 g de produit recherché qui cristallise lentement.

*Spectre de RMN*

$CH_3$ du radical terbutyle: 1,5 ppm
$CH_3$ sur le cycle: de 1,31 à 1,46 ppm
$CH_2$ adjacent au P: de 2,98 à 3,28 ppm
CH du cycle: de 4,22 à 5,11 ppm

*Préparation du 2-terbutoxycarbonylméthyl, 5,5-diméthyl-2-oxo 1,3,2-dioxaphosphorinane:*

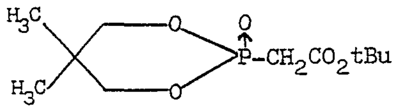

A 27 $cm^3$ de bromoacétate de terbutyle préalablement chauffés à 115° C, on ajoute en 2 h, sous une pression de 130 mm de mercure, 25,5 g de 2-méthoxy, 5,5-diméthyl 1,3,2-dioxaphosphorinane. On maintient en réaction pendant 15 min après la fin de l'introduction, puis on chasse l'excès de réactif par distillation sous pression réduite.

Le produit recherché est cristallisé dans l'éther isopropylique. 35 g de phosphorinane pur sont ainsi obtenus. F = 98° C.

*Spectre de RMN* ($CDCl_3$)
$CH_3$ du tBu: 1,49 ppm
$CH_3$ géminés sur le cycle: 1,06 et 1,1 ppm
$CH_2$ en α du P: 2,8 et 3,16 ppm
$J_{H-P}$ = 22 Hz

*Exemple 2:*

*Acide (1R,cis-ΔZ) 2,2-diméthyl 3-(3-méthoxy 3-oxo-1-propényl)cyclopropanecarboxylate de méthoxyméthyle*

En opérant comme à l'exemple 1, à partir de 1,9 g de (1R,cis) 2,2-diméthyl 3-formyl-1-carboxylate de méthoxyméthyle et de 2,7 g de 2-méthoxycarbonylméthyl-4,5-diméthyl 2-oxo-1,3,2-dioxaphospholane,on obtient 3 g d'un produit brut renfermant 90% de l'isomère ΔZ recherché.

Les composés utilisés comme produits de départ pour la préparation de l'exemple 2 sont obtenus comme suit:

*Préparation 2:*

2-méthoxycarbonylméthyl 4,5-diméthyl-2-oxo 1,3,2-dioxaphospholane:

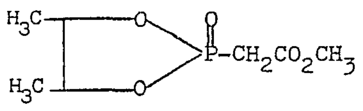

On chauffe à 120 ≏ 130° C, 45 $cm^3$ de 1-bromoacétate de méthyle sur lequel on introduit ensuite en 70 min 69,8 g du produit préparé au stade A de la préparation 1. On laisse revenir à la température ambiante et distille l'excès de 1-bromoacétate de méthyle. On rectifie le produit brut obtenu et obtient 73 g du produit recherché. Eb. = 130-132° C.

*Préparation 3:*

(1R,cis) 2,2-diméthyl 3-formylcyclopropanecarboxylate de méthoxyméthyle.

*Stade A: Préparation du chlorométhylméthyléther*

On introduit sous agitation 70 $cm^3$ de chlorure d'acétyle dans un mélange renfermant 90 $cm^3$ de méthylal et 2,4 $cm^3$ de méthanol. On laisse ensuite le mélange réactionnel pendant quelques heures.

*Stade B: (1R,cis) 2,2-diméthyl 3-formylcyclopropanecarboxylate de méthoxyméthyle*

On ajoute en 30 min environ à 15 ± 2° C dans 110 g de la lactone de l'acide (1R,cis) 2,2-diméthyl 3-(dihydroxyméthyl)cyclopropane 1-carboxylique, dissoute dans 500 $cm^3$ de tétrahydrofuranne, 6,7 g d'hydrure de lithium. On agite pendant 30 min. On relie l'appareil qui contient ce mélange à celui renfermant le produit obtenu au stade A pour transvaser le chloroéther sur le sel de lithium. On maintient 4 h à 20° C sous agitation. On verse le milieu réactionnel sur une solution aqueuse de bicarbonate de sodium. On extrait à l'éther isopropylique. On lave la phase organique, la sèche. Après évaporation des solvants, il reste 117 g de produit brut qui est purifié par distillation. Eb. $5{,}10^{-2}$ = 65-70° C.

*Exemple 3:*

*(1R,cis-ΔZ) 2,2-diméthyl 3-(3-éthoxy-3-oxa-1-propényl)cyclopropanecarboxylate de méthoxyméthyle*

En opérant comme à l'exemple 1, à partir de 1,9 g de (1R,cis) 2,2-diméthyl 3-formyl-1-carboxylate de méthoxyméthyle et de 3 g de 2-éthoxycarbonylméthyl 4,5-diméthyl 2-oxo 1,3,2-dioxophospholane (préparé selon le procédé décrit par E. Breuer et coll., «Tetrahedron», *34*, 997, 1973), on obtient ainsi 1,6 g d'un mélange renfermant 99,5% d'isomère ΔZ. F = 100° C.

*Exemple 4:*

*(1R,cis-ΔZ) 2,2-diméthyl 3-(3-oxo 3-méthylthio propényl)cyclopropanecarboxylate de tert.-butyle*

*Stade A: Préparation du diisopropylamidure de lithium*

On ajoute à 0 ±5° C et sous agitation 45 $cm^3$ d'une solution 2,3M de butyllithium dans le cyclohexane, dans un mélange renfermant 9,73 g de diisopropylamine et 100 $cm^3$ de tétrahydrofuranne.

*Stade B: Préparation de l'anion*

On refroidit à −50° C sous atmosphère inerte 19,6 g de 2-(méthylthiocarbonylméthyl) 4,5-diméthyl 2-oxo 1,3,2-dioxaphospholane dans 100 $cm^3$ de tétrahydrofuranne. On ajoute en 20 min la totalité du produit préparé au stade A. On conserve le produit obtenu à une température ≤ −30° C.

*Stade C: Produit recherché*

On introduit à −50° C et sous agitation la totalité du produit préparé au stade B dans une solution renfermant 14 g de (1R,cis) 3-formyl 2,2-diméthylcyclopropanecarboxylate de tert.-butyle dans 200 $cm^3$ de tétrahydrofuranne. On agite le produit réactionnel pendant 1½ h à −30° C. On verse dans une solution aqueuse saturée de phosphate monosodique et extrait à l'acétate d'éthyle. On lave, sèche, filtre et amène à sec sous pression réduite les extraits réunis. On obtient 30 g de produit que l'on chromatographie sur silice en éluant par le mélange: hexane/acétate d'éthyle (9/1). On isole

ainsi 6,9 g du produit recherché fondant à 57-58° C.

*Préparation 4:*

Le 2-(méthylthiocarbonylméthyl) 4,5-diméthyl 2-oxo 1,3,2-dioxaphospholane utilisé comme produit de départ a été préparé comme suit:

*Stade A: Bromothioacétate de méthyle*

On ajoute à 10° C dans 150 cm³ de benzène 14 cm³ de pyridine et 15 cm³ de $CH_3SH$. On refroidit à 0° C et ajoute en 30 min une solution de 14 cm³ de chlorure de bromoacétyle dans 50 cm³ de benzène. On laisse revenir à 20° C et agite pendant 4 h. On verse le mélange réactionnel sur une solution glacée d'acide chlorhydrique N et agite pendant 15 min. On décante la phase benzénique, sèche et amène à sec. On obtient ainsi le produit recherché que l'on rectifie. On isole 20 g de produit. Eb. 0,05 = 36° C.

*Stade B: 2-(méthylthiocarbonylméthyl) 4,5-diméthyl-2-oxo 1,3,2-dioxaphospholane*

On ajoute goutte à goutte à 130° C en 30 min 18,7 g de produit préparé au stade A dans 18,7 g de 2-méthoxy 4,5-diméthyl 1,3,2-dioxaphospholane. On maintient ensuite sous agitation à 140° C pendant 1 h. On amène à sec sous pression réduite à 80° C le produit obtenu. On obtient ainsi 2,5 g de produit recherché.

*Exemple 5:*

*Acide (1R,cis-ΔE) 2,2-diméthyl 3-(3-éthoxy-3-oxo 2-fluoro-1-propényl)cyclopropanecarboxylique*

On place 0,5 g de bromure de lithium dans 10 cm³ de tétrahydrofuranne, puis on introduit à −40° C 0,2 cm³ de diisopropylamine, 0,25 g de lactone de l'acide (1R,cis) 2,2-diméthyl 3-dihydroxyméthylcyclopropanecarboxylique et 0,5 g de 2-(éthoxycarbonylfluorométhyl) 5,5-diméthyl 2-oxo 1,2,3-dioxaphosphorinane. On ajoute ensuite lentement 0,5 g de terbutylate de potassium dissous dans 3 cm³ de tétrahydrofuranne. On maintient 1 h à −40° C. On verse sur de l'acide chlorhydrique dilué, extrait à l'éther isopropylique et concentre à sec.

L'acide obtenu renferme 95% d'isomère E.

*Préparation 5:*

2-(éthoxycarbonylfluorométhyl) 5,5-diméthyl 2-oxo 1,2,3-dioxaphosphorinane

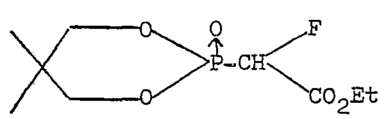

On chauffe 3 h à 150° C sous une pression de 500 mm/Hg 10 g de bromofluoroacétate d'éthyle et 6,4 g de 2-méthoxy 5,5-diméthyl 1,2,3-dioxaphosphorinane. Après avoir refroidi on purifie par chromatographie sur silice (éluant: $CHCl_3$ 1/acétone 1/hexane 1).

Le produit recherché est isolé avec un rendement de 30%.

*Spectre de RMN* ($CDCl_3$)
$CH_3$ du cycle: 0,91 et 1,3 ppm
$CH_2-CH_3$ de l'ester: 1,21-1,33-1,45, 4,18-4,3-4,41-4,53 ppm
$CH_2O$ du cycle: 3,66 à 4,5 ppm
−CH− en α de F et P: 4,91-5,11 ppm, 5,7-5,9 ppm
$J_{H-P}$ = 12 Hz
$J_{H-F}$ = 47 Hz

*Exemple 6:*

*Acide (1R,cis-ΔZ) 2,2-diméthyl 3-(3-oxo 3-méthoxy 1-propényl)cyclopropanecarboxylique*

On mélange 10 g de bromure de lithium et 40 cm³ de tétrahydrofuranne anhydre, refroidit à −10° C et ajoute 2,84 g de lactone de l'acide (1R,cis) 2,2-diméthyl 3-dihydrométhylcyclopropanecarboxylique. On refroidit à −30° C et ajoute 4 cm³ de diisopropylamine puis 5,6 g de 2-méthoxycarbonylméthyl 4,5-diméthyl 2-oxo 1,3,2-dioxaphospholane et enfin 4,8 g de tertbutylate de potassium dans 20 cm³ de tétrahydrofuranne. On laisse en contact pendant 1 h à −30° C, puis verse dans 200 cm³ de mélange d'acide chlorhydrique 1N et de glace. On essore les cristaux et isole 2,34 g de produit attendu. F = 100° C, renfermant 99,5% d'isomère Z.

*Exemple 7:*

*Acide (1R,cis-ΔZ) 2,2-diméthyl 3-(3-oxo 3-éthoxy 1-propényl)cyclopropanecarboxylique*

On mélange 5 g de bromure de lithium et 20 cm³ de tétrahydrofuranne, puis ajoute 1,420 g de lactone de l'acide (1R,cis) 2,2-diméthyl 3-dihydroxyméthylcyclopropanecarboxylique et 3 g de 2-éthoxycarbonylméthyl 4,5-diméthyl 2-oxo 1,3,2-dioxaphospholane. On ajoute ensuite à −20° C, 2 cm³ de diisopropylamine dans 10 cm³ de tétrahydrofuranne, puis, à −30, −35° C, 2,5 g de terbutylate de potassium dans 10 cm³ de tétrahydrofuranne. On maintient 1 h à −30° C, verse dans un mélange eau/glace/acide chlorhydrique concentré, essore les cristaux, les sèche et obtient 1,51 g de produit attendu. F = 100° C, renfermant 98,9% d'isomère Z.

*Exemple 8:*

*Acide (1R,cis-ΔZ) 2,2-diméthyl 3-(3-oxo 3-propoxycarbonyl 1-propényl)cyclopropanecarboxylique*

On opère de manière analogue à celle décrite à l'exemple 6, en utilisant au départ 1,26 g de lactone de l'acide (1R,cis) 2,2-diméthyl 3-dihydroxyméthylcyclopropanecarboxylique et 3,13 g de 2-propoxycarbonylméthyl 4,5-diméthyl 2-oxo 1,3,2-dioxaphospholane et obtient, après recristallisation dans l'hexane, 0,89 g de produit attendu. F = 59° C.

$\alpha_D = +77° \pm 1,5°$ (c = 1% $CHCl_3$).

*Préparation 6:*

2-Propoxycarbonylméthyl 4,5-diméthyl 2-oxo 1,3,2-dioxaphospholane.

On opère de manière analogue à celle décrite à la préparation 1, stade B, en utilisant au départ 3,8 g de bromoacétate de n-propyle et 2,42 g de 2-méthoxy 4,5-diméthyl 1,3,2-dioxaphospholane. On obtient 3,62 g de produit attendu brut, utilisé tel quel dans l'exemple 8.

*Exemple 9;*

*Acide (1R,cis-ΔZ) 2,2-diméthyl 3-(3-oxo 3-isopropoxy 1-propényl)cyclopropanecarboxylique*

On opère de manière analogue à celle décrite à l'exemple 6, en utilisant au départ 0,76 g de lactone de l'acide (1R,cis) 2,2-diméthyl 3-dihydroxyméthylcyclopropanecarboxylique et 1,9 g de 2-isopropoxycarbonylméthyl 4,5-diméthyl 2-oxo 1,3,2-dioxaphospholane et obtient 1 g de produit attendu isomère Z. F = 100° C.

$\alpha_D$ = +71° ±2° (c = 1% $CHCl_3$) et 0,09 g d'isomère E.

*Préparation 7:*

2-Isopropoxycarbonylméthyl 4,5-diméthyl 2-oxo 1,3,2-dioxaphospholane.

On opère de manière analogue à celle décrite à la préparation 1, stade B, en utilisant au départ 2,03 g de bromoacétate d'isopropyle et 1,3 g de 2-méthoxy 4,5-diméthyl 1,3,2-dioxaphospholane. On obtient 1,94 g de produit attendu brut, utilisé tel quel dans l'exemple 9.

*Exemple 10:*

*(1R,cis-ΔZ) 2,2-diméthyl 3-(3-oxo 3-tert.-butoxy 1-propényl)cyclopropanecarboxylate de méthoxyméthyle*

On opère de manière analogue à celle décrite à l'exemple 1, en utilisant au départ 3,25 g de 2-tert.-butoxycarbonylméthyl 4,5-diméthyl 2-oxo 1,3,2-dioxaphospholane et 1,5 g de (1R,cis) 2,2-diméthyl 3-formyl 1-carboxylate de méthoxyméthyle. On obtient, après chromatographie sur silice en éluant au mélange hexane/acétate d'éthyle (9/1), 1,9 g de produit attendu. F <50° C, et 0,1 g d'isomère E.

*Exemple 11:*

*(1R,cis-ΔZ) 2,2-diméthyl 3-(3-oxo 3-méthoxy 1-propényl)cyclopropanecarboxylate de tert.-butyle*

On mélange 0,4 $cm^3$ de diisopropylamine et 4 $cm^3$ de tétrahydrofuranne et ajoute à −10, −20° C, 1,3 $cm^3$ d'une solution 2M de butyllithium dans le cyclohexane. On agite pendant 15 min à −10, −20° C puis refroidit à −50, −60° C et verse sur un mélange de 0,4 g de (1R,cis) 2,2-diméthyl 3-formylcyclopropanecarboxylate de tert.-butyle, 0,562 g de 2-méthoxycarbonylméthyl 4,5-diméthyl 2-oxo 1,3,2-dioxaphospholane et 10 $cm^3$ de tétrahydrofuranne, refroidit à −50, −60° C. On maintient en contact 1 h à −40° C, verse sur une solution aqueuse glacée, saturée de phosphate acide de sodium, extrait à l'éther isopropylique, sèche la phase organique et évapore le solvant. On obtient 0,5 g de produit attendu renfermant 88% d'isomère Z.

*Exemple 12:*

*(1R,cis-ΔZ) 2,2-diméthyl 3-(3-oxo 3-éthoxy 1-propényl)cyclopropanecarboxylate de (RS) α-cyano 3-phénoxybenzyle*

On mélange 1 g de 2-éthoxycarbonylméthyl 4,5-diméthyl 2-oxo 1,3,2-dioxaphospholane et 10 $cm^3$ de tétrahydrofuranne, puis refroidit à −60° C et ajoute lentement 0,495 g de tert.-butylate de potassium dans 6 $cm^3$ de tétrahydrofuranne. On laisse 10 min à −60° C puis verse lentement sur un mélange de 1,2 g de (1R,cis) 2,2-diméthyl 3-formylcyclopropanecarboxylate de (RS) α-cyano 3-phénoxybenzyle dans 13 $cm^3$ de tétrahydrofuranne. On laisse 10 min à −60° C puis verse sur une solution 1N d'acide chlorhydrique, extrait au chlorure de méthylène, lave à l'eau, sèche et évapore le solvant. On chromatographie le résidu sur silice en éluant au mélange hexane/acétate d'éthyle (8/2) et obtient 0,96 g de produit attendu, isomère Z. En poursuivant la chromatographie, on obtient 0,3 g d'isomère E.

Les exemples suivants décrivent la préparation de certains des produits décrits dans la demande de brevet français N° 81-19481.

*Exemple A:*

*1R,cis 2,2-diméthyl 3/(ΔZ) 3-oxo-3-méthylthio-propényl/cyclopropanecarboxylate de S α-cyano-3-phénoxybenzyle*

Dans 20 $cm^3$ de chlorure de méthylène on introduit 4,1 g de 1R,cis 2,2-diméthyl 3/(ΔZ) carboxy-éthényl/cyclopropanecarboxylate de S(α) cyano 3-phénoxybenzyle, 50 mg de diméthylaminopyridine, ajoute à 0° C 2,16 g de dicyclohexylcarbodiimide, agite pendant 5 min, introduit en une seule fois une solution de 545 mg de méthylmercaptan dans 5 $cm^3$ de benzène, agite pendant 5 min à 0° C, puis pendant 16 h à 20° C, élimine par filtration l'insoluble formé, lave le filtrat par une solution aqueuse N d'acide chlorhydrique, à l'eau, concentre le filtrat à sec par distillation sous pression réduite, chromatographie le résidu sur gel de silice en éluant par le mélange cyclohexane/acétate d'éthyle (9/1) et obtient 1,2 g de 1R,cis 2,2-diméthyl 3/(ΔZ) 3-oxo-3-méthylthiopropényl/cyclopropanecarboxylate de S α-cyano 3-phénoxybenzyle. F = 87° C, $[\alpha]_D$ = +51° (c = 1% benzène).

*Exemple B:*

*1R,cis 2,2-diméthyl 3-/(ΔZ) 3-oxo 3-éthylthio-propényl/cyclopropanecarboxylate de S α-cyano-3-phénoxybenzyle*

Dans 10 $cm^3$ de chlorure de méthylène on introduit 2 g de 1R,cis 2,2-diméthyl 3/(ΔZ) carboxy-éthényl/cyclopropanecarboxylate de S (α)-cyano-3-phénoxybenzyle, ajoute en une seule fois 1,5 $cm^3$ d'éthanethiol puis à +5° C une solution de 1 g de dicyclohexylcarbodiimide et de 40 mg de diméthylaminopyridine dans 5 $cm^3$ de chlorure de méthylène, agite pendant 5 min à +5° C, pendant 3 h à température ambiante, élimine par filtration l'insoluble formé, concentre le filtrat à sec par distillation sous pression réduite, chromatographie le résidu sur gel de silice en éluant avec un mélange de n-hexane et d'acétate d'éthyle (8/2) et obtient 1,2 g de 1R,cis 2,2-diméthyl 3/(ΔZ) 3-oxo-3-éthylthiopropényl/cyclopropanecarboxylate de S α-cyano 3-phénoxybenzyl. F = 47° C $[\alpha]_D$ = +59° (c = 0,4% chloroforme).

*Exemple C:*

*1R,cis 2,2-diméthyl 3-/(ΔZ) 3-oxo-3-isopropylthiopropényl/cyclopropanecarboxylate de (S) α-cyano 3-phénoxybenzyle*

Dans une solution de 3,9 g de 1R,cis 2,2-diméthyl 3-/(ΔZ) carboxyéthényl/cyclopropanecarboxylate de (S) α-cyano 3-phénoxybenzyle dans 25 $cm^3$ de chlorure de méthylène, on ajoute en une fois 3 $cm^3$ de 2-propanethiol, puis à +5° C, 2 g de dicyclohexylcarbodiimide et 70 mg de diméthylaminopyridine en solution dans 10 $cm^3$ de chlorure de méthylène, agite pendant 5 min à +5° C puis pendant 3 h à température ambiante, élimine par filtration l'insoluble formé, concentre le filtrat à sec par distillation sous pression réduite, chromatographie le résidu sur gel de silice en éluant par un mélange de n-hexane et d'acétate d'éthyle (85/15) et obtient 3,1 g de 1R,cis 2,2-diméthyl 3-/(ΔZ) 3-oxo 3-isopropylthioprophényl/cyclopropanecarboxylate de (S) α-cyano 3-phénoxybenzyle. F = 80° C.

$[\alpha]_D$ = +69° (c = 0,5% chloroforme).

*Exemple D:*

*1R,cis 2,2-diméthyl 3/(ΔZ) 3-oxo-3-terbutylthiopropényl/cyclopropanecarboxylate de S α-cyano 3-phénoxybenzyle*

Dans une solution de 3,46 g de 1R,cis 2,2-diméthyl 3/(ΔZ) carboxyéthényl/cyclopropanecarboxylate de S α-cyano 3-phénoxybenzyle dans 20 $cm^3$ de chlorure de méthylène, on introduit à +5° C 150 mg de diméthylaminopyridine et 1,9 g de dicyclohexylcarbodiimide, agite à +5° C pendant 5 min, ajoute 5 $cm^3$ de tert.-butylmercaptan, agite pendant 5 min à +5° C, puis pendant 3 h à 20° C, élimine par filtration l'insoluble formé, concentre le filtrat à sec par distillation sous pression réduite, chromatographie le résidu sur gel de silice en éluant par un mélange de cyclohexane et d'acétate d'éthyle (9/1) et obtient 1,4 g de 1R,cis 2,2-diméthyl 3/(ΔZ) 3-oxo-3-tert.-butylthiopropényl/cyclopropanecarboxylate de S α-cyano-3-phénoxybenzyle. F = 76° C.

$[\alpha]_D$ = +55° (c = 0,5% benzène).

## Revendications

1. Procédé de préparation des composés répondant à la formule (I):

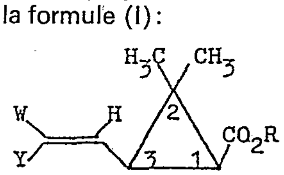

(I)

dans laquelle la copule cyclopropanique est de structure 1R cis, R représente un atome d'hydrogène, un radical alcoyle renfermant de 1 à 18 atomes de carbone, un radical facilement clivable dérivé d'un alcool R−OH renfermant jusqu'à 18 atomes de carbone, ou un radical dérivé d'un alcool ROH utilisé en série pyréthrinoïde, et: ou bien W représente un atome d'hydrogène et Y représente un radical $CO_2R'$ ou COSR',
ou bien W représente un atome d'halogène Hal et Y représente un radical $CO_2R'$, R' représentant un atome d'hydrogène ou un radical alcoyle linéaire, ramifié ou cyclisé, saturé ou insaturé, éventuellement substitué par un ou plusieurs groupements fonctionnels identiques ou différents, ou un radical aryle renfermant de 6 à 14 atomes de carbone éventuellement substitué par un ou plusieurs groupements fonctionnels identiques ou différents, ou un radical hétérocyclique éventuellement substitué par un ou plusieurs groupements fonctionnels identiques ou différents, formule (I) dans laquelle la configuration de la double liaison est:
soit Z, si W représente un atome d'hydrogène,
soit E, si W représente un atome d'halogène,
caractérisé en ce que l'on soumet en présence d'une base forte un composé de formule (II):

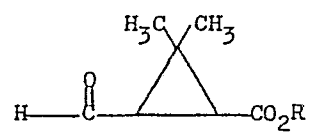

(II)

dans laquelle la copule cyclopropanique est de structure 1R cis et R conserve la signification précitée, à l'action d'un composé de formule (III):

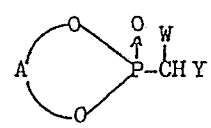

(III)

dans laquelle Y et W conservent leur signification précédente, et A représente un radical carboné renfermant jusqu'à 18 atomes de carbone qui relie deux des atomes d'oxygène fixés sur le phosphore, pour obtenir le composé de formule (I) dans laquelle la configuration de la double liaison est:
soit Z, si W représente un atome d'hydrogène,
soit E, si W représente un atome d'halogène,
le cyclopropane et le carboxyle du radical Y étant dans les deux cas en position cis par rapport à la double liaison.

2. Procédé selon la revendication 1, caractérisé en ce que R représente:
soit un radical alcoyle linéaire, ramifié ou cyclisé, renfermant de 1 à 18 atomes de carbone,
soit un radical benzyle éventuellement substitué par un ou plusieurs radicaux choisis dans le groupe constitué par les radicaux alcoyles comportant de 1 à 4 atomes de carbone, les radicaux alcényles comportant de 2 à 6 atomes de carbone, les radicaux alcényloxy comportant de 2 à 6 atomes de carbone, les radicaux alcadiényles comportant de 4 à 8 atomes de carbone, le reste méthylènedioxy, et les atomes d'halogène,

soit un groupement: 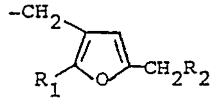

dans lequel le substituant $R_1$ représente un atome d'hydrogène ou un radical méthyle et le substituant $R_2$ un aryle monocyclique ou un groupement $-CH_2-C\equiv CH$,

soit un groupement: 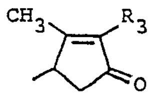

dans lequel $R_3$ représente un radical organique aliphatique comportant de 2 à 6 atomes de carbone et une ou plusieurs insaturations carbone-carbone et notamment les radicaux $-CH_2-CH=CH_2$, $-CH_2-CH=CH-CH_3$, $-CH_2-CH=CH-C_2H_5$, $-CH_2-CH=CH-CH=CH_2$,

soit un groupement: 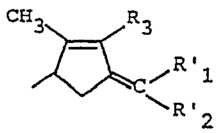

dans lequel $R_3$ conserve la même signification que précédemment, $R'_1$ et $R'_2$, identiques ou différents, représentent un atome d'hydrogène, un atome d'halogène, un radical alcoyle renfermant de 1 à 6 atomes de carbone, un radical aryle comportant de 6 à 10 atomes de carbone, un groupement alcoyloxycarbonyle comportant de 2 à 5 atomes de carbone, ou un groupement cyano,

soit un groupement:

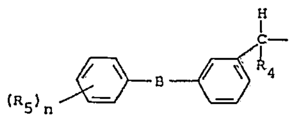

dans lequel B représente un atome d'oxygène ou de soufre ou un groupement:

$$-\overset{\overset{O}{\|}}{C}- \text{ ou } -CH_2-$$

ou un groupement sulfoxyde ou un groupement sulfone et $R_4$ représente un atome d'hydrogène, un radical $-C\equiv N$, un radical méthyle, un radical $-CONH_2$, un radical $-CSNH_2$ ou un radical $-C\equiv CH$, $R_5$ représente un atome d'halogène ou un radical méthyle et n représente un nombre égal à 0, 1 ou 2,

soit un groupement:

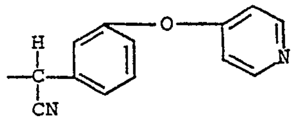

soit un groupement:

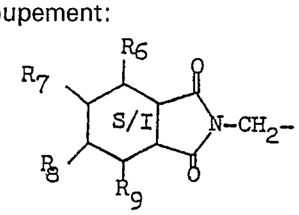

dans lequel les substituants $R_6$, $R_7$, $R_8$ et $R_9$ représentent un atome d'hydrogène, un atome de chlore, ou un radical méthyle et dans lequel S/I symbolise un cycle aromatique ou un cycle analogue dihydro ou tétrahydro,

soit un groupement:

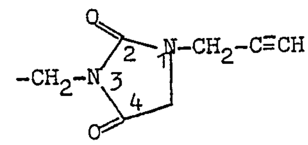

soit un groupement:

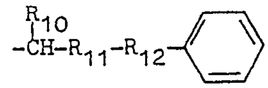

dans lequel $R_{10}$ représente un atome d'hydrogène ou un radical CN, $R_{12}$ représente un radical $-CH_2-$ ou un atome d'oxygène, $R_{11}$ représente un radical thiazolyle ou thiadiazolyle dont la liaison avec

$$-\overset{\overset{R_{10}}{|}}{CH}-$$

peut se trouver à l'une quelconque des positions disponibles, $R_{12}$ étant lié à $R_{11}$ par l'atome de carbone compris entre l'atome de soufre et un atome d'azote,

soit un groupement:

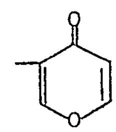

soit un groupement:

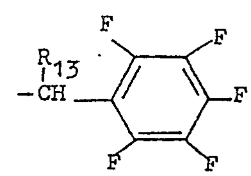

dans lequel $R_{13}$ représente un atome d'hydrogène ou un radical CN,

soit un groupement:

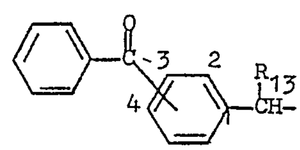

dans lequel $R_{13}$ est défini comme ci-dessus et le radical benzoyle est en position 3 ou 4,

soit un groupement:

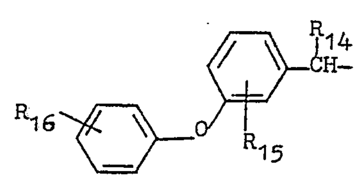

dans lequel $R_{14}$ représente un atome d'hydrogène, un radical méthyle, éthynyle ou cyano et $R_{15}$ et

$R_{16}$, différents, représentent un atome d'hydrogène, de fluor ou de brome,
soit un groupement:

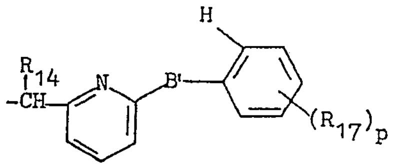

dans lequel $R_{14}$ est défini comme ci-dessus, chacun des $R_{17}$ représente indépendamment un atome d'hydrogène, un groupement alcoyle renfermant de 1 à 4 atomes de carbone, alcoxy renfermant de 1 à 4 atomes de carbone, alcoythio renfermant de 1 à 4 atomes de carbone, alcoylsulfonyl renfermant de 1 à 4 atomes de carbone, trifluorométhyl, 3,4-méthylènedioxy, chloro, fluoro ou bromo, p représente un nombre égal à 0, 1 ou 2 et B' représente un atome d'oxygène ou de soufre.

3. Procédé selon la revendication 2, caractérisé en ce que R représente le radical:

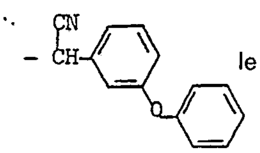 le radical: 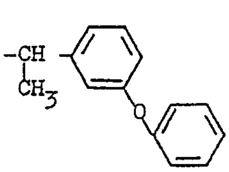

ou le radical: 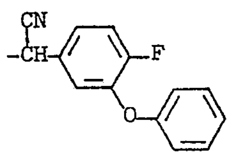

ou le radical: 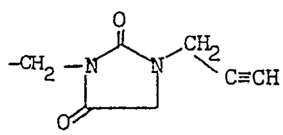

ou le radical: 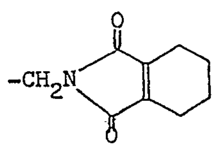

ou le radical: 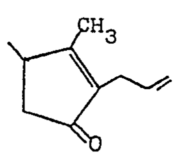

ou le radical: 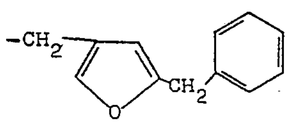

ou le radical: 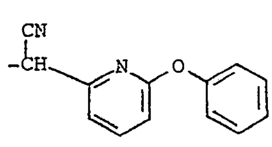

4. Procédé de préparation selon la revendication 1, caractérisé en ce que R représente un atome d'hydrogène ou le reste facilement clivable d'un alcool renfermant jusqu'à 18 atomes de carbone.

5. Procédé de préparation selon la revendication 4, caractérisé en ce que R représente le reste facilement clivable d'un alcool choisi dans le groupe constitué par le radical:

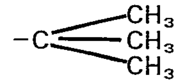

le radical $-CH_2OCH_3$, le radical $-CH_2C_6H_5$, le radical $-CH_2SCH_3$ et le radical $-Si(alc)_3$, alc représentant un radical alcoyle renfermant de 1 à 6 atomes de carbone.

6. Procédé selon l'une des revendications 1 à 5, caractérisé en ce que l'on utilise un composé de formule ($III_1$):

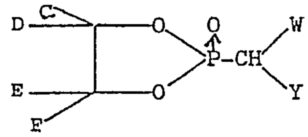 ($III_1$)

ou un composé de formule ($III_2$):

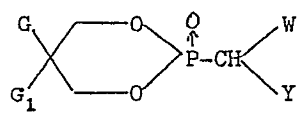 ($III_2$)

dans lesquels les substituants C, D, E, F, G et $G_1$ représentent un atome d'hydrogène ou un radical alkyle renfermant de 1 à 3 atomes de carbone.

7. Procédé selon la revendication 6, caractérisé en ce que l'on utilise un composé de formule ($III_1$) dans laquelle les substituants C et E représentent un atome d'hydrogène et les substituants D et F un radical méthyle.

8. Procédé selon l'une des revendications 1 à 7, caractérisé en ce que l'on opère à une température comprise entre −70 et +25° C.

9. Procédé selon l'une des revendications 1 à 8, caractérisé en ce que l'on opère au sein d'un solvant choisi dans le groupe constitué par le tétrahydrofuranne, le diméthylformamide, le diméthylsulfoxyde, l'hexaméthylphosphotriamide et le diméthoxyéthane, purs ou en mélanges avec des hydrocarbures aliphatiques ou aromatiques.

10. Procédé de préparation selon l'une des revendications 1 à 9, caractérisé en ce que l'on fait réagir un composé de formule (II) défini comme précédemment avec un composé de formule ($III_A$):

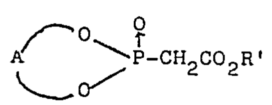 ($III_A$)

A et R' étant définis comme précédemment, pour obtenir un composé de formule ($I_A$):

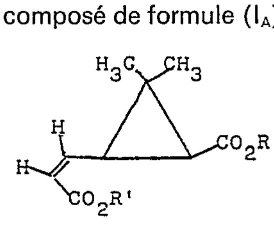 ($I_A$)

dans laquelle la configuration de la double liaison est Z.

11. Procédé de préparation selon l'une des revendications 1 à 9, caractérisé en ce que l'on fait réagir un composé de formule (II) défini comme précédemment avec un composé de formule ($III_B$):

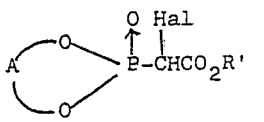

($III_B$)

A, R' et Hal étant définis comme précédemment, pour obtenir le composé de formule ($I_B$):

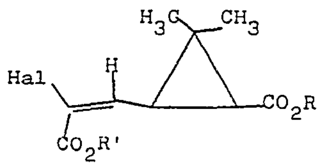

($I_B$)

dans laquelle la configuration de la double liaison est E.

12. Procédé de préparation selon l'une des revendications 1 à 9, caractérisé en ce que l'on fait réagir un composé de formule (II) défini comme précédemment avec un composé de formule ($III_C$):

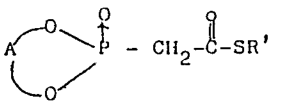

($III_C$)

dans laquelle A et R' sont définis comme précédemment, pour obtenir les composés de formule ($I_C$) correspondants:

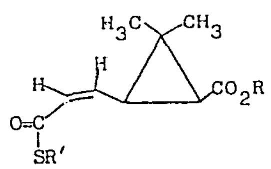

($I_C$)

dans laquelle la configuration de la double liaison est Z.

13. A titre de produits chimiques nouveaux, les produits de formules ($III_{A1}$) et ($III_{A2}$), tels que définis à la revendication 10 répondant aux formules:

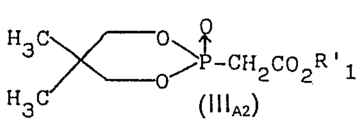

($III_{A2}$)

ou

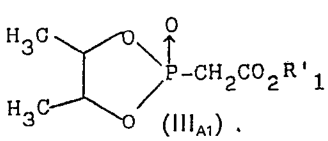

($III_{A1}$).

dans lesquelles $R'_1$ représente un radical propyle, isopropyle ou tert.-butyle.

14. A titre de produits chimiques nouveaux, tels que définis aux revendications 11 et 12, les composés de formule ($III_B$) et ($III_C$):

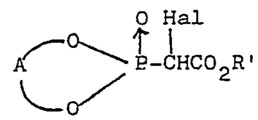

($III_B$)

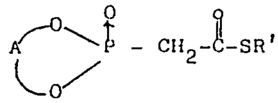

($III_C$)

et notamment les produits de formule:

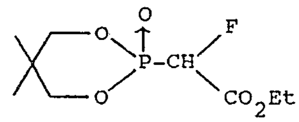

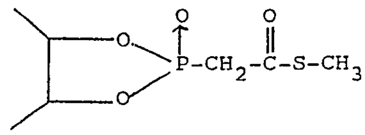

## Patentansprüche

1. Verfahren zur Herstellung von Verbindungen der Formel (I):

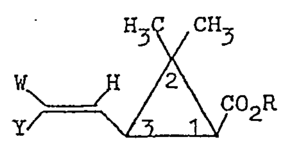

(I)

worin die Cyclopropan-Verknüpfungskomponente die 1R,cis-Struktur besitzt, R ein Wasserstoffatom, einen Alkylrest mit 1 bis 18 Kohlenstoffatomen, einen sich von einem Alkohol R−OH mit bis zu 18 Kohlenstoffatomen ableitenden leicht spaltbaren Rest oder einen sich von einem in der Pyrethrinoidreihe verwendeten Alkohol R−OH ableitenden Rest darstellt, und

entweder W ein Wasserstoffatom bedeutet und Y einen Rest $CO_2R'$ oder COSR' bedeutet,

oder W ein Halogenatom Hal bedeutet und Y einen Rest $CO_2R'$ darstellt, worin R' ein Wasserstoffatom oder einen gesättigten oder ungesättigten linearen, verzweigten oder cyclischen Alkylrest, der ggf. durch eine oder mehrere gleiche oder verschiedene funktionelle Gruppen substituiert ist, oder einen Arylrest mit 6 bis 14 Kohlenstoffatomen, der ggf. durch eine oder mehrere gleiche oder verschiedene funktionelle Gruppen substituiert ist, oder einen heterocyclischen Rest, der ggf. durch eine oder mehrere gleiche oder verschiedene funktionelle Gruppen substituiert ist, bedeutet,

in der Formel (I) die Konfiguration der Doppelbindung entweder die Z-Konfiguration ist, wenn W ein Wasserstoffatom bedeutet,

oder die E-Konfiguration ist, wenn W ein Halogenatom bedeutet, dadurch gekennzeichnet, dass man in Gegenwart einer starken Base eine Verbindung der Formel (II):

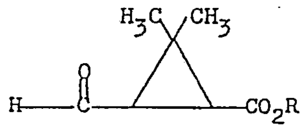

(II)

worin die Cyclopropan-Verknüpfungskomponente die 1 R,cis-Struktur besitzt und R die vorstehende Bedeutung besitzt, der Einwirkung einer Verbindung der Formel (III):

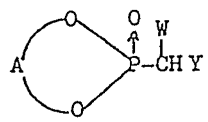

(III)

unterzieht, worin Y und W die vorstehend angegebene Bedeutung besitzen und A einen Kohlenstoffrest mit bis zu 18 Kohlenstoffatomen bedeutet, der zwei an dem Phosphor gebundene Sauerstoffatome verbindet, um die Verbindung der Formel (I) zu erhalten, worin die Konfiguration der Doppelbindung

entwerder die Z-Konfiguration ist, wenn W ein Wasserstoffatom bedeutet,

oder die E-Konfiguration ist, wenn W ein Halogenatom bedeutet,

wobei sich in diesen beiden Fällen der Cyclopropanring und die Carboxylgruppe des Restes Y in cis-Stellung in bezug auf die Doppelbindung befinden.

2. Verfahren gemäss Anspruch 1, dadurch gekennzeichnet, dass R bedeutet:

entweder einen linearen, verzweigten oder cyclischen Alkylrest mit 1 bis 18 Kohlenstoffatomen,

oder einen Benzylrest, der ggf. durch einen oder mehrere Reste, ausgewählt unter den Alkylresten mit 1 bis 4 Kohlenstoffatomen, den Alkenylresten mit 2 bis 6 Kohlenstoffatomen, den Alkenyloxyresten mit 2 bis 6 Kohlenstoffatomen, den Alkadienylresten mit 4 bis 8 Kohlenstoffatomen, dem Methylendioxyrest und den Halogenatomen, substituiert ist,

oder eine Gruppe:

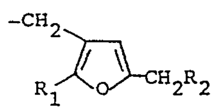

worin der Substituent $R_1$ ein Wasserstoffatom oder einen Methylrest bedeutet und der Substituent $R_2$ einen monocyclischen Arylrest oder eine Gruppe $-CH_2-C\equiv CH$,

oder eine Gruppe:

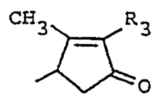

worin $R_3$ einen aliphatischen organischen Rest mit 2 bis 6 Kohlenstoffatomen und einer oder mehreren Kohlenstoff-Kohlenstoff-Unsättigungen und insbesondere die Reste $-CH_2-CH=CH_2$, $-CH_2-CH=CH-CH_3$, $-CH_2-CH=CH-C_2H_5$, $-CH_2-CH=CH-CH=CH_2$, bedeutet,

oder eine Gruppe:

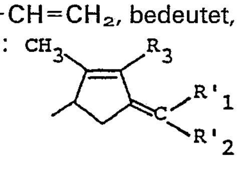

worin $R_3$ die vorstehend angegebene Bedeutung besitzt, $R'_1$ und $R'_2$ gleich oder verschieden sind und ein Wasserstoffatom, ein Halogenatom, einen Alkylrest mit 1 bis 6 Kohlenstoffatomen, einen Arylrest mit 6 bis 10 Kohlenstoffatomen, eine Alkoxycarbonylgruppe mit 2 bis 5 Kohlenstoffatomen oder eine Cyanogruppe bedeuten,

oder eine Gruppe:

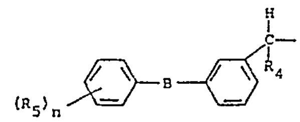

worin B ein Sauerstoff- oder Schwefelatom oder eine Gruppe

O
‖
–C–

oder $-CH_2-$ oder eine Sulfoxidgruppe oder eine Sulfongruppe bedeutet und $R_4$ ein Wasserstoffatom, einen Rest $-C\equiv N$, einen Methylrest, einen Rest $-CONH_2$, einen Rest $-CSNH_2$ oder einen Rest $-C\equiv CH$ bedeutet, $R_5$ ein Halogenatom oder einen methylrest bedeutet und n eine Zahl entsprechend 0, 1 oder 2 darstellt,

oder eine Gruppe:

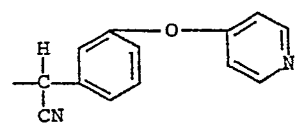

oder eine Gruppe:

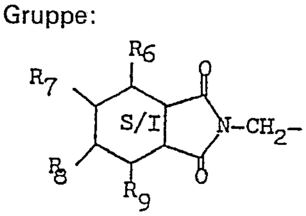

worin die Substituenten $R_6$, $R_7$, $R_8$ und $R_9$ ein Wasserstoffatom, ein Chloratom oder einen Methylrest darstellen und S/I einen aromatischen Ring oder einen analogen Dihydro- oder Tetrahydroring symbolisiert,

oder eine Gruppe:

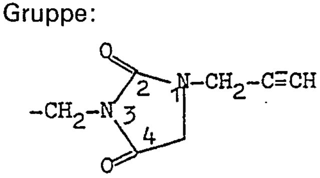

oder eine Gruppe:

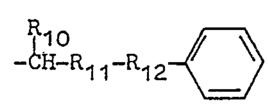

worin $R_{10}$ ein Wasserstoffatom oder einen CN-Rest bedeutet, $R_{12}$ einen Rest $-CH_2-$ oder ein Sauerstoffatom bedeutet, $R_{11}$ einen Thiazolyl- oder Thiadiazolylrest bedeutet, dessen Verknüpfung mit

$R_{10}$
|
–CH–

sich in irgendeiner der verfügbaren Positionen befinden kann, wobei $R_{12}$ an $R_{11}$ über das zwischen dem Schwefelatom und einem Stickstoffatom befindliche Kohlenstoffatom gebunden ist, oder eine Gruppe:

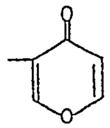

oder eine Gruppe:

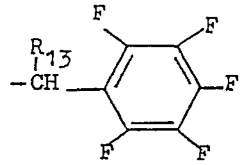

worin $R_{13}$ ein Wasserstoffatom oder einen CN-Rest bedeutet
oder eine Gruppe:

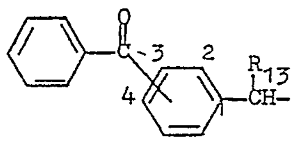

worin $R_{13}$ wie vorstehend definiert ist und der Benzoylrest sich in 3- oder 4-Stellung befindet, oder eine Gruppe:

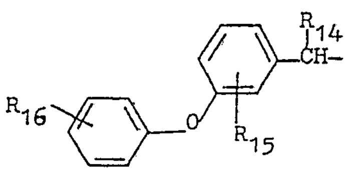

worin $R_{14}$ ein Wasserstoffatom, einen Methyl-, Äthinyl- oder Cyanorest bedeutet und $R_{15}$ und $R_{16}$, die verschieden sind, ein Wasserstoff-, Fluor- oder Bromatom bedeuten,
oder eine Gruppe:

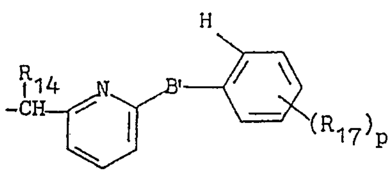

worin $R_{14}$ wie vorstehend definiert ist, ein jeder der Reste $R_{17}$ unabhängig ein Wasserstoffatom, eine Alkylgruppe mit 1 bis 4 Kohlenstoffatomen, eine Alkoxygruppe mit 1 bis 4 Kohlenstoffatomen, eine Alkylthiogruppe mit 1 bis 4 Kohlenstoffatomen, eine Alkylsulfonylgruppe mit 1 bis 4 Kohlenstoffatomen, eine Trifluormethylgruppe, 3,4-Methylendioxy, Chlor, Fluor oder Brom bedeutet, p eine Zahl entsprechend 0, 1 oder 2 darstellt und B' ein Sauerstoff- oder Schwefelatom bedeutet.

3. Verfahren gemäss Anspruch 2, dadurch gekennzeichnet, dass R den Rest:

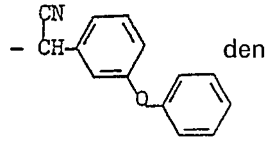

den Rest:

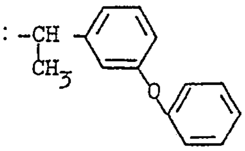

oder den Rest:

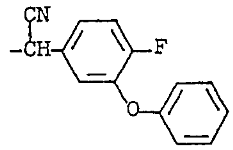

oder den Rest:

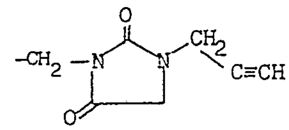

oder den Rest:

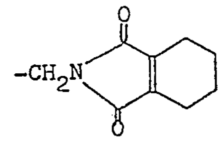

oder den Rest:

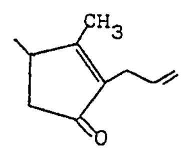

oder den Rest:

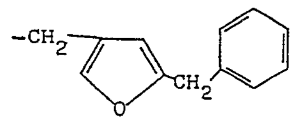

oder den Rest:

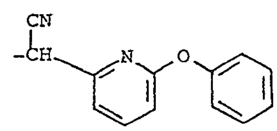

bedeutet.

4. Verfahren gemäss Anspruch 1, dadurch gekennzeichnet, dass R ein Wasserstoffatom oder den leicht abspaltbaren Rest eines Alkohols mit bis zu 18 Kohlenstoffatomen bedeutet.

5. Verfahren gemäss Anspruch 4, dadurch gekennzeichnet, dass R den leicht abspaltbaren Rest eines Alkohols, ausgewählt unter dem Rest

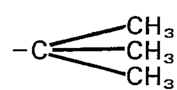

dem Rest $-CH_2OCH_3$, dem Rest $-CH_2C_6H_5$, dem Rest $-CH_2SCH_3$ und dem Rest $-Si(alc)_3$ bedeutet, wobei alc einen Alkylrest mit 1 bis 6 Kohlenstoffatomen darstellt.

6. Verfahren gemäss einem der Ansprüche 1 bis 5, dadurch gekennzeichnet, dass man eine Verbindung der Formel ($III_1$):

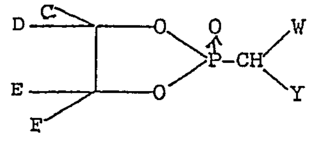

($III_1$)

oder eine Verbindung der Formel ($III_2$):

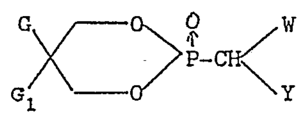

$(III_2)$

verwendet, worin die Substituenten C, D, E, F, G und $G_1$ ein Wasserstoffatom oder einen Alkylrest mit 1 bis 3 Kohlenstoffatomen darstellen.

7. Verfahren gemäss Anspruch 6, dadurch gekennzeichnet, dass man eine Verbindung der Formel $(III_1)$ verwendet, worin die Substituenten C und E ein Wasserstoffatom bedeuten und die Substituenten D und F einen Methylrest darstellen.

8. Verfahren gemäss einem der Ansprüche 1 bis 7, dadurch gekennzeichnet, dass man bei einer Temperatur zwischen −70 und +25° C arbeitet.

9. Verfahren gemäss einem der Ansprüche 1 bis 8, dadurch gekennzeichnet, dass man in dem Medium eines Lösungsmittels, ausgewählt unter Tetrahydrofuran, Dimethylformamid, Dimethylsulfoxid, Hexamethylphosphortrisamid und Dimethoxyäthan, in reiner Form oder in Form von Gemischen mit aliphatischen oder aromatischen Kohlenwasserstoffen arbeitet.

10. Herstellungsverfahren gemäss einem der Ansprüche 1 bis 9, dadurch gekennzeichnet, dass man eine Verbindung der Formel (II), wie vorstehend definiert, mit einer Verbindung der Formel $(III_A)$:

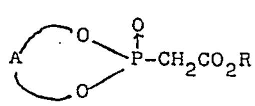

$(III_A)$

worin A und R′ wie vorstehend definiert sind, umsetzt, um eine Verbindung der Formel $(I_A)$:

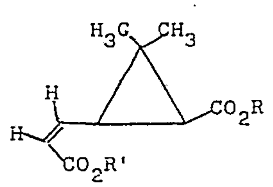

$(I_A)$

zu erhalten, worin die Konfiguration der Doppelbindung die Z-Konfiguration ist.

11. Herstellungsverfahren gemäss einem der Ansprüche 1 bis 9, dadurch gekennzeichnet, dass man eine Verbindung der Formel (II), wie vorstehend definiert, mit einer Verbindung der Formel $(III_B)$:

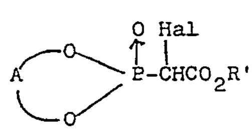

$(III_B)$

worin A, R′ und Hal wie vorstehend definiert sind, umsetzt, um die Verbindung der Formel $(I_B)$:

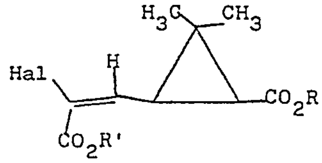

$(I_B)$

zu erhalten, worin die Konfiguration der Doppelbindung die E-Konfiguration ist.

12. Herstellungsverfahren gemäss einem der Ansprüche 1 bis 9, dadurch gekennzeichnet, dass man eine Verbindung der Formel (II), wie vorstehend definiert, mit einer Verbindung der Formel $(III_C)$:

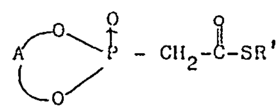

$(III_C)$

worin A und R′ wie vorstehend definiert sind, umsetzt, um die entsprechenden Verbindung der Formel $(I_C)$:

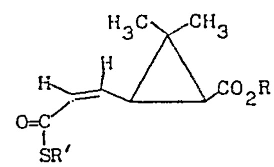

$(I_C)$

zu erhalten, worin die Konfiguration der Doppelbindung die Z-Konfiguration ist.

13. Als neue chemische Produkte die Produkte der Formeln $(III_{A1})$ und $(III_{A2})$, wie in Anspruch 10 definiert, der Formeln:

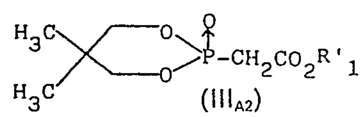

$(III_{A2})$

und

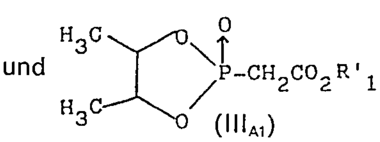

$(III_{A1})$

worin $R'_1$ einen Propyl-, Isopropyl- oder tert.-Butylrest bedeutet.

14. Als neue chemische Produkte, wie in Anspruch 11 und 12 definiert, die Verbindungen der Formeln $(III_B)$ und $(III_C)$:

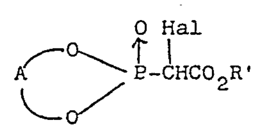

$(III_B)$

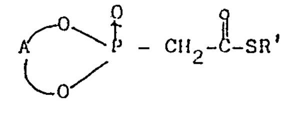

$(III_C)$

und insbesondere die Produkte der Formel:

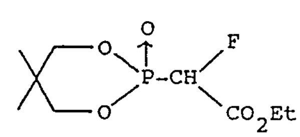

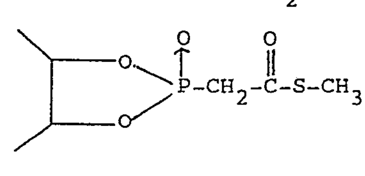

## Claims

1. Preparation process for compounds answering to the Formula (I):

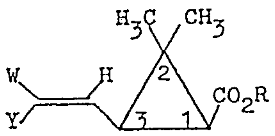

(I)

in which the cyclopropane copula is of 1R,cis structure, R represents a hydrogen atom, an alkyl radical containing from 1 to 10 carbon atoms, an easily cleavable radical derived from an alcohol R−OH containing up to 18 carbon atoms, or a radical derived from an alcohol R−OH used in pyrethrinoid series,
and: either W represents a hydrogen atom and Y represents a radical $CO_2R'$ or COSR',
or W represents a halogen atom Hal and Y represents a radical $CO_2R'$, R' representing a hydrogen atom or a linear, branched or cyclised, saturated or unsaturated alkyl radical, possibly substituted by one of more identical or different functional groups, or an aryl radical containing from 6 to 14 carbon atoms possibly substituted by one or more identical or different functional groups, or a heterocyclic radical possibly substituted by one or more identical or different functional groups, in which Formula (I) the configuration or the double bond is
either Z, if W represents a hydrogen atom,
or E, if W represents a halogen atom, characterized in that a compound with the Formula (II):

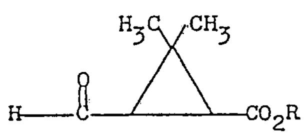

(II)

in which the cyclopropane copula is of 1R,cis structure and R retains the previously cited significance, is submitted in the presence of a strong base to the action of a compound with the Formula (III):

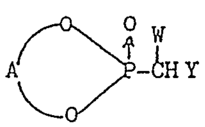

(III)

in which Y and W retain their previous significance, and A represents a carbonated radical containing up to 18 carbon atoms which links two of the oxygen atoms attached to the phosphorus, so as to obtain the compound with the Formula (I) in which the configuration of the double bond is
either Z if W represents a hydrogen atom,
or E if W represents a halogen atom,
the cyclopropane and the carboxyl of the radical Y being in both cases in cis position in relation to the double bond.

2. Process according to Claim 1, characterized in that R represents:
either a linear, branched or cyclised alkyl radical, containing from 1 to 18 carbon atoms,
or a benzyl radical possibly substituted by one or more radicals chosen from the group composed of the alkyl radicals containing from 1 to 4 carbon atoms, the alkenyl radicals containing from 2 to 6 carbon atoms, the alkenyloxy radicals containing from 2 to 6 carbon atoms, the alkadienyl radicals containing from 4 to 8 carbon atoms, the methylene dioxy residue, and the halogen atoms,
or a group:

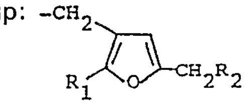

in which the substituent $R_1$ represents a hydrogen atom or a methyl radical and the substituent $R_2$ a monocyclic aryl or a group $-CH_2-C\equiv CH$,
or a group:

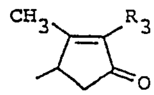

in which $R_3$ represents an aliphatic organic radical containing from 2 to 6 carbon atoms and one or more carbon-carbon unsaturations and in particular the radicals $-CH_2-CH=CH_2$, $-CH_2-CH=CH-CH_3$, $-CH_2-CH=CH-C_2H_5$, $-CH_2-CH=CH-CH=CH_2$
or a group:

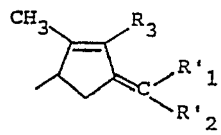

in which $R_3$ retains the same significance as previously, $R'_1$ and $R'_2$, being identical or different, each represent a hydrogen atom, a halogen atom, an alkyl radical containing from 1 to 6 carbon atoms, an aryl radical including from 6 to 10 carbon atoms, an alkyloxycarbonyl group including from 2 to 5 carbon atoms, or a cyano group,
or a group:

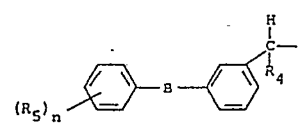

in which B represents an oxygen or sulphur atom or a group

$$-\overset{\overset{O}{\|}}{C}- \text{ or } -CH_2-$$

or a sulphoxide group or a sulphone group and $R_4$ represents a hydrogen atom, a $-C\equiv N$ radical, a methyl radical, a $-CONH_2$ radical, a $-CSNH_2$ radical or a $-C\equiv CH$ radical, $R_5$ represents a halogen atom or a methyl radical and n represents a number 0, 1 or 2,
or a group:

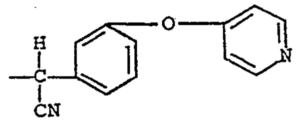

or a group:

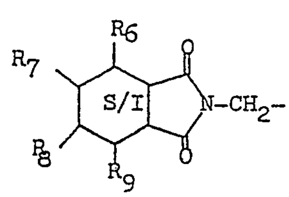

in which the substituents $R_6$, $R_7$, $R_8$ and $R_9$ represent a hydrogen atom, a chlorine atom or a methyl radical and in which S/I symbolises an aromatic ring or a similar dihydro or tetrahydro ring,
or a group:

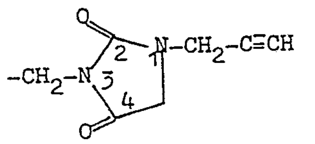

or a group:

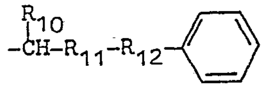

in which $R_{10}$ represents a hydrogen atom or a CN radical, $R_{12}$ represents a radical $-CH_2-$ or an oxygen atom, $R_{11}$ represents a thiazolyl or thiadiazolyl radical, of which the bond with

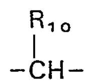

can be situated at any one of the available positions, $R_{12}$ being linked to $R_{11}$ by the carbon atom between the sulphur atom and a nitrogen atom,
or a group:

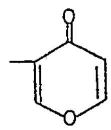

or a group:

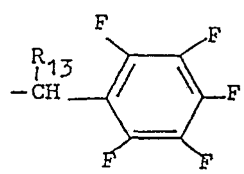

in which $R_{13}$ represents a hydrogen atom or a radical CN,
or a group:

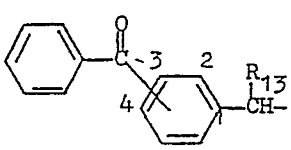

in which $R_{13}$ is defined as above and the benzyl radical is at position 3 or 4,
or a group:

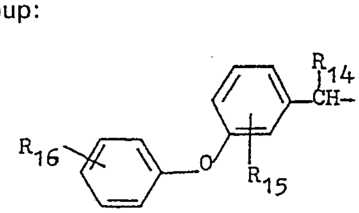

in which $R_{14}$ represents a hydrogen atom, a methyl, ethynyl or cyano radical and $R_{15}$ and $R_{16}$, being different, represent a hydrogen, fluorine or bromine atom,
or a group:

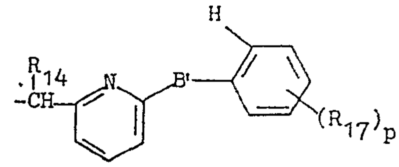

in which $R_{14}$ is defined as above, each of the $R_{17}$'s represents independently a hydrogen atom, an alkyl group containing from 1 to 4 carbon atoms, an alkoxy group containing from 1 to 4 carbon atoms, an alkylthio group containing from 1 to 4 carbon atoms, an alkylsulphonyl group containing from 1 to 4 carbon atoms, a trifluoromethyl group, a 3,4-methylenedioxy group, a chloro, fluoro or bromo group, p represents a number 0, 1 or 2 and B' represents an oxygen or sulphur atom.

3. Process according to Claim 2, characterized in that R represents the radical:

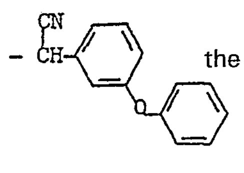 the radical: 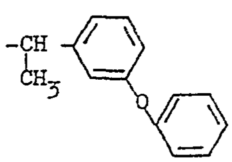

or the radical: 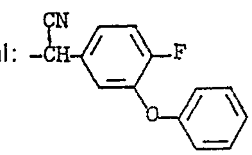

or the radical: 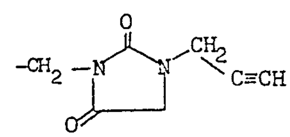

or the radical: 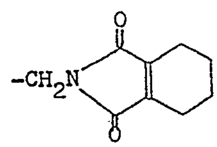

or the radical: 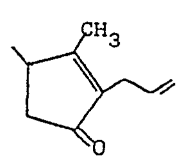

or the radical: 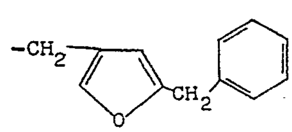

or the radical: 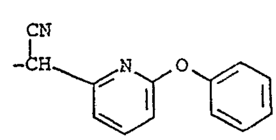

4. Preparation process according to Claim 1, characterized in that R represents a hydrogen atom

or the easily cleavable residue of an alcohol containing up to 18 carbon atoms.

5. Preparation process according to Claim 4, characterized in that R represents the easily cleavable residue of an alcohol, chosen from the group composed of the radical

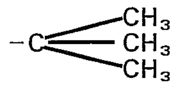

the radical $-CH_2OCH_3$, the radical $-CH_2C_6H_5$, the radical $-CH_2SCH_3$ and the radical $-Si(alk)_3$, alk representing an alkyl radical containing from 1 to 6 carbon atoms.

6. Process according to any one of the Claims 1 to 5, characterized in that a compound with the Formula ($III_1$):

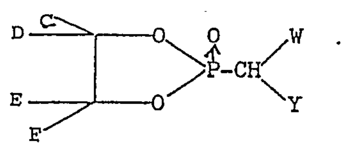

($III_1$)

or a compound with the Formula ($III_2$):

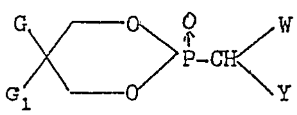

($III_2$)

in which the substituents C, D, E, F, G and $G_1$ represent a hydrogen atom or an alkyl radical containing from 1 to 3 carbon atoms.

7. Process according to Claim 6, characterized in that a compound with the Formula ($III_1$) is used in which the substituents C and E represent a hydrogen atom and the substituents D and F represent a methyl radical.

8. Process according to any one of the Claims 1 to 7, characterized in that the operation is done at a temperature between −70 and +25° C.

9. Process according to any one of the Claims 1 to 8, characterized in that the operation is done in a solvent chosen from the group composed of tetrahydrofuran, dimethylformamide, dimethylsulphoxide, hexamethylphosphotriamide and dimethoxyethane, pure or in mixtures with aliphatic or aromatic hydrocarbons.

10. Preparation process according to any one of the Claims 1 to 9, characterized in that a compound with the Formula (II) defined as previously is made to react with a compound with the Formula ($III_A$):

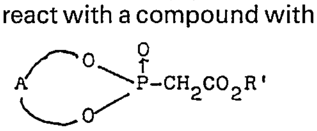

($III_A$)

A and R′ being defined as previously, so as to obtain a compound with the Formula ($I_A$):

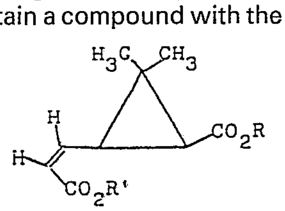

($I_A$)

in which the configuration of the double bond is Z.

11. Preparation process according to any one of the Claims 1 to 9, characterized in that a compound with the Formula (II) as defined previously is made to react with a compound with the Formula ($III_B$):

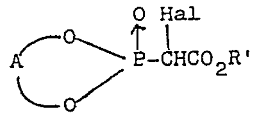

($III_B$)

A, R′ and Hal being defined as previously, so as to obtain the compound with the Formula ($I_B$):

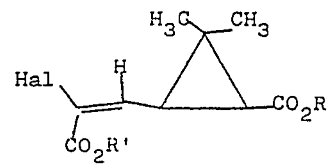

($I_B$)

in which the configuration of the double bond is E.

12. Preparation process according to any one of the Claims 1 to 9, characterized in that a compound with the Formula (II) defined as previously is made to react with a compound with the Formula ($III_C$):

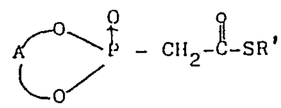

($III_C$)

in which A and R′ are defined as previously, so as to obtain the corresponding compounds with the Formula ($I_C$):

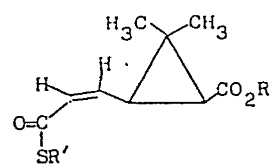

($I_C$)

in which the configuration of the double bond is Z.

13. As new chemical products, the products with the Formulae ($III_{A1}$) and ($III_{A2}$) as defined in Claim 10 answering to the formulae

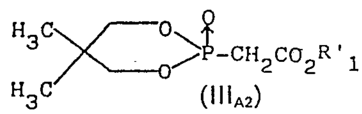

($III_{A2}$)

or

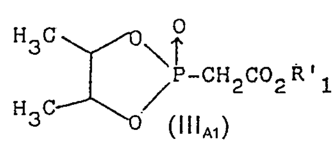

($III_{A1}$)

in which $R'_1$ represents a propyl, isopropyl or tert.-butyl radical.

14. As new chemical products as defined in Claims 11 and 12 the compounds with the Formulae ($III_B$) and ($III_C$):

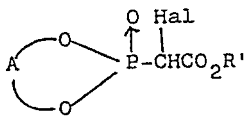

$(III_B)$

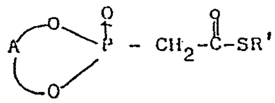

$(III_C)$

and in particular the products with the formula: